# EUROPÄISCHE PATENTSCHRIFT

(11) **EP 3 569 367 B1**
(45) Veröffentlichungstag und Bekanntmachung des Hinweises auf die Patenterteilung: **03.08.2022**
(21) Anmeldenummer: 18172937.7
(22) Anmeldetag: 17.05.2018
(51) Int. Cl.: B25J 9/16

(54) **RECHNERGESTÜTZTES ERMITTELN EINER BEWEGUNG EINER VORRICHTUNG**
COMPUTER-AIDED DETERMINATION OF A MOVEMENT OF A DEVICE
DÉTERMINATION D'UN MOUVEMENT D'UN DISPOSITIF ASSISTÉE PAR ORDINATEUR

(43) Veröffentlichungstag der Anmeldung: 20.11.2019
(73) Patentinhaber: Siemens Aktiengesellschaft, 80333 München (DE)
(72) Erfinder: Neubauer, Werner, 81739 München (DE); Schmitt, Philipp Sebastian, 81735 München (DE)

(56) Entgegenhaltungen:
- CN-A- 105 717 869
- CN-A- 105 751 196
- JIE LIU: "3D surface reconstruction based trajectory control for a magnetic scattering film plating robot", JOURNAL OF INTELLIGENT MANUFACTURING, KLUWER ACADEMIC PUBLISHERS, BO, Bd. 20, Nr. 6, 30. August 2008 (2008-08-30), Seiten 719-726, XP019749939, ISSN: 1572-8145
- JIUN YIH KUAN ET AL: "A new time-efficient trajectory planning solution for humanoid robot arms", ROBOTICS AND BIOMIMETICS, 2007. ROBIO 2007. IEEE INTERNATIONAL CONFERENCE ON, IEEE, PISCATAWAY, NJ, USA, 15. Dezember 2007 (2007-12-15), Seiten 312-317, XP031252822, ISBN: 978-1-4244-1761-2

## Beschreibung

Die vorliegende Erfindung betrifft ein rechnergestütztes Verfahren zum Ermitteln einer Bewegung einer Vorrichtung sowie ein Computerprogrammprodukt und ein System zum Durchführen des Verfahrens.

Aus dem Stand der Technik sind Verfahren zur Bewegungsplanung von Vorrichtungen bekannt. Eine Möglichkeit, eine Bewegung einer Vorrichtung zu planen, ist das sogenannte *Teach-In* Verfahren, bei dem eine Vorrichtung mittels einer Steuerung in vorgegebene Positionen gefahren wird. Die Positionen werden gespeichert und im Rahmen einer Bewegungsausführung erneut abgefahren (Punkt-zu-Punkt Steuerung).

Aus der Patentschrift DE 10 2008 057 142 B4 ist ein Verfahren zur rechnergestützten Bewegungsplanung eines Roboters bekannt. Im Rahmen des Verfahrens werden Raumpositionen eines dem Roboter zugeordneten Raumpunkts in einem ortsfesten Koordinatensystem basierend auf inverser Kinematik in Konfigurationspositionen umgerechnet. Die Konfigurationspositionen werden durch Achsenpositionen von rotatorischen und/oder translatorischen Bewegungsachsen des Roboters beschrieben. Die Konfigurationspositionen werden auf Kollisionen überprüft. Eine Trajektorie wird entlang von Raumpositionen des Raumpunkts gebildet, deren Konfigurationspositionen kollisionsfrei sind.

Aus der Druckschrift CN 105751196 A ist ein Verfahren zum Betreiben eines auf dem Master-Slave Prinzip beruhenden, kooperativen Robotersystems bekannt. Beim Verfahren werden Bewegungstrajektorien in einem kartesischen Koordinatensystem und Bewegungstrajektorien in einem auf Achsenpositionen bezogenen Konfigurationsraum geplant.

Aus der Druckschrift "3D surface reconstruction based trajectory control for a magnetic scattering film plating robot" (Lie, J.; J. Intell. Manuf. 2008, Bd. 20, Nr. 6, S. 719-726) ist ein Verfahren bekannt, im Rahmen dessen in einem kartesischen Koordinatensystem und in einem Konfigurationsraum unterschiedliche Methoden zur Bewegungsplanung verwendet werden.

Aus der Druckschrift "A new time-efficient trajectory planning solution for humanoid robot arms" (Kuan, J. Y. et al.; Proceedings of the 2007 IEEE, International Conference on Robotics and Biomimetics, Dezember 15-18 2007, Sanya, China, S. 312-317) ist ein Verfahren bekannt, bei dem Bewegungstrajektoriensegmente unabhängig voneinander bestimmt werden.

Eine Aufgabe der vorliegenden Erfindung besteht darin, ein rechnergestütztes Verfahren zum Ermitteln einer Bewegung einer Vorrichtung anzugeben. Diese Aufgabe wird durch ein rechnergestütztes Verfahren zum Ermitteln einer Bewegung einer Vorrichtung, durch ein Computerprogrammprodukt zum Durchführen des Verfahrens und durch ein System zum Durchführen des Verfahrens mit den Merkmalen der unabhängigen Ansprüche gelöst. Vorteilhafte Ausführungsformen sind in abhängigen Ansprüchen angegeben.

Ein rechnergestütztes Verfahren zum Ermitteln einer Bewegung einer Vorrichtung, die ein über translatorische und/oder rotatorische Bewegungsachsen der Vorrichtung bewegbares Werkzeug aufweist, weist folgende Verfahrensschritte auf: Eine erste Bewegungstrajektorie des Werkzeugs wird in einem ersten Konfigurationsraum ermittelt. Beim Ermitteln der ersten Bewegungstrajektorie wird ein vorgegebener Parameter einer Bewegung des Werkzeugs optimiert. Es wird geprüft, ob die erste Bewegungstrajektorie zumindest eine vorgegebene erste Randbedingung erfüllt. Eine zweite Bewegungstrajektorie des Werkzeugs in einem zweiten Konfigurationsraum wird durch Transformieren der ersten Bewegungstrajektorie in den zweiten Konfigurationsraum ermittelt, wenn die erste Bewegungstrajektorie die vorgegebene erste Randbedingung erfüllt. Es wird geprüft, ob die zweite Bewegungstrajektorie zumindest eine vorgegebene zweite Randbedingung erfüllt. Die erste Bewegungstrajektorie und/oder die zweite Bewegungstrajektorie werden zum Bewegen des Werkzeugs bereitgestellt, wenn die zweite Bewegungstrajektorie die vorgegebene zweite Randbedingung erfüllt.

Die Vorrichtung kann als Roboter, als Gelenkroboter oder als jede andere Art von Vorrichtung ausgebildet sein, die das Werkzeug über translatorische und/oder rotatorische Bewegungsachsen bewegen kann. Das Werkzeug kann als beliebiges Werkzeug ausgebildet sein. Beispielsweise kann das Werkzeug ein Greifer oder eine Fräse sein. Die Bewegung der Vorrichtung kann durch eine Bewegung eines der Vorrichtung zugeordneten Raumpunkts dargestellt werden. Da mit dem Werkzeug Prozesse durchgeführt werden sollen, kann es zweckmäßig sein, die Bewegung der Vorrichtung auf die Bewegung des Werkzeugs abzustellen, sodass der der Vorrichtung zugeordnete Raumpunkt dem Werkzeug zugeordnet wird. Die Bewegung des Werkzeugs wird durch eine Bewegungstrajektorie des Raumpunkts repräsentiert. Eine Bewegungstrajektorie des Raumpunkts kann in verschiedenen Konfigurationsräumen dargestellt werden. Ein Konfigurationsraum kann beispielsweise ein ortsfestes Basiskoordinatensystem, beispielsweise ein kartesisches Koordinatensystem, sein. Ein Konfigurationsraum kann sich auch auf Positionen der Bewegungsachsen der Vorrichtung beziehen, also gegebenenfalls ein multidimensionaler Achsenraum sein. Eine Position des dem Werkzeug zugeordneten Raumpunkts im ortsfesten Basiskoordinatensystem, eine sogenannte Werkzeugpose, lässt sich durch Positionen der Bewegungsachsen im Achsenraum, den sogenannten Konfigurationspositionen, beschreiben. Mathematisch kann eine Werkzeugpose durch eine Koordinatentransformation der Konfigurationsposition ermittelt werden, was als direkte Kinematik bezeichnet wird. Umgekehrt kann eine Werkzeugpose durch eine inverse Koordinatentransformation in eine Konfigurationsposition überführt werden, was als inverse Kinematik bezeichnet wird.

Die erste Bewegungstrajektorie kann beispielsweise durch eine Spline-Interpolation ermittelt werden. Als Splines werden Polynomzüge bezeichnet. Eine vorgegebener Parameter der Bewegung des Werkzeugs, der beim Ermitteln der ersten Bewegungstrajektorie optimiert wird, kann beispielsweise eine Zeit sein, innerhalb derer das Werkzeug entlang der ersten Bewegungstrajektorie bewegt werden soll. In diesem Fall kann das Optimieren des vorgegebenen Parameters beispielsweise in einem Minimieren der Zeit bestehen. Eine vorgegebene Randbedingung, die die erste Bewegungstrajektorie einhalten soll, kann beispielsweise eine Forderung nach einer Kollisionsfreiheit der Vorrichtung beim Bewegen des Werkzeugs entlang der ersten Bewegungstrajektorie sein. Eine vorgegebene Randbedingung kann aber auch eine Prozesstoleranz sein, die beim Bewegen des Werkzeugs entlang der ersten Bewegungstrajektorie eingehalten werden soll.

Vorgegebene Randbedingungen und Optimierungskriterien können in den verschiedenen Konfigurationsräumen formuliert werden. Dabei kann es sein, dass sich beispielsweise eine vorgegebene Randbedingung in einem Konfigurationsraum einfacher und effizienter formulieren lässt, als in einem anderen Konfigurationsraum. Erfolgt das Ermitteln der ersten Bewegungstrajektorie in einem Konfigurationsraum, in dem sich eine vorgegebene Randbedingung effizienter formulieren lässt, so kann die vorgegebene Randbedingung vorteilhafterweise genauer eingehalten werden. Soll die Vorrichtung beispielsweise beim Bewegen des Werkezugs entlang der ersten Bewegungstrajektorie kollisionsfrei bewegt werden, so können kollisionsfreie Raumabschnitte in einem Konfigurationsraum als Tunnel ausgebildet sein. Je nach Wahl des Konfigurationsraums kann ein solcher kollisionsfreier Tunnel gekrümmt oder geradlinig ausgebildet sein. In einem geradlinigen Tunnel kann die erste Bewegungstrajektorie effizienter ermittelt werden, als in einem gekrümmt ausgebildeten Tunnel. Durch die Auswahl eines geeigneten Konfigurationsraums kann das Ermitteln der ersten Bewegungstrajektorie also effizienter sein. Außerdem kann die Auswahl des geeigneten Konfigurationsraums die erste Bewegungstrajektorie für einen Anwender anschaulicher und vorhersehbarer werden lassen.

Beim Verfahren zum Ermitteln der Bewegung der Vorrichtung werden also unterschiedliche vorgegebene Randbedingungen in unterschiedlichen Konfigurationsräumen berücksichtigt und überprüft. Aus diesem Grund wird beim Verfahren nach dem Ermitteln der ersten Bewegungstrajektorie im ersten Konfigurationsraum eine zweite Bewegungstrajektorie im zweiten Konfigurationsraum durch Transformieren der ersten Bewegungstrajektorie in den zweiten Konfigurationsraum ermittelt, wenn die erste Bewegungstrajektorie die vorgegebene erste Randbedingung erfüllt. Anschließend wird geprüft, ob die zweite Bewegungstrajektorie die vorgegebene zweite Randbedingung erfüllt. Vorteilhafterweise erfolgt auf diese Weise das Planen der Bewegung der Vorrichtung in unterschiedlichen Konfigurationsräumen, wodurch das Ermitteln der Bewegung effizienter sein kann.

Eine erste Teilbewegung des Werkzeugs wird durch einen ersten Abschnitt der ersten Bewegungstrajektorie festgelegt. Eine zweite Teilbewegung des Werkzeugs wird durch einen zweiten Abschnitt der zweiten Bewegungstrajektorie festgelegt.

Es ist zweckmäßig, die Bewegung des Werkzeugs in Teilbewegungen zu unterteilen. Beispielsweise kann es sinnvoll sein, die erste Teilbewegung, bei der das Werkzeug, ohne einen Prozess durchzuführen, im Freiraum bewegt werden soll, im ersten Konfigurationsraum festzulegen, wenn die erste Teilbewegung im Freiraum sich im ersten Konfigurationsraum effizienter formulieren lässt, als im zweiten Konfigurationsraum. Umgekehrt kann es sein, dass die zweite Teilbewegung, bei dem das Werkzeug einen Prozess ausführen soll, im zweiten Konfigurationsraum effizienter formuliert werden kann, als im ersten Konfigurationsraum. Beispielsweise kann es sein, dass die erste Teilbewegung im ersten Konfigurationsraum durch einen geradlinig ausgebildeten ersten Abschnitt der ersten Bewegungstrajektorie beschrieben wird, während die zweite Teilbewegung im ersten Konfigurationsraum durch einen gekrümmten Abschnitt der ersten Bewegungstrajektorie beschrieben wird. Umgekehrt kann es sein, dass die zweite Teilbewegung im zweiten Konfigurationsraum durch einen geradlinig ausgebildeten zweiten Abschnitt der zweiten Bewegungstrajektorie beschrieben wird, während die erste Teilbewegung im zweiten Konfigurationsraum durch einen gekrümmten Abschnitt der zweiten Bewegungstrajektorie beschrieben wird. In diesem Fall bietet es sich an, die Bewegung des Werkzeugs derart festzulegen, dass die Teilbewegungen durch jeweils geradlinig ausgebildete Abschnitte der Bewegungstrajektorien in den jeweiligen Konfigurationsräumen festgelegt sind.

Ein Vorteil gegenüber bestehenden Verfahren zum Ermitteln einer Bewegung einer Vorrichtung besteht darin, dass die Vorrichtung an einem Übergang von der ersten Teilbewegung zur zweiten Teilbewegung des Werkzeugs nicht angehalten werden muss, wenn die Bewegung anhand des vorliegenden rechnergestützten Verfahrens geplant wird. Dies liegt daran, dass die Bewegung in beiden Konfigurationsräumen unter Einhaltung der vorgegebenen Randbedingungen geplant wird. Bisherige Ansätze weisen den Nachteil auf, dass die in den unterschiedlichen Konfigurationsräumen festgelegten Teilbewegungen jeweils lediglich in dem entsprechenden Konfigurationsraum geplant werden. Beim vorliegenden Verfahren wird hingegen die gesamte Bewegung in beiden Konfigurationsräumen geplant, wodurch der Übergang von der ersten zur zweiten Teilbewegung flüssig, d.h. ohne anzuhalten und mit höherer Geschwindigkeit, erfolgen kann. Vorteilhafterweise können auf diese Weise die Teilbewegungen des Werkzeugs effizient miteinander verknüpft werden.

Dies ist mit einem Überschleifen von der ersten zur zweiten Teilbewegung vergleichbar. Allerdings muss im Vergleich zur Punkt-zu-Punkt Steuerung die erste Bewegungstrajektorie nicht notwendigerweise von einem vorgegeben Übergangspunkt zwischen dem ersten und dem zweiten Abschnitt abweichen, um eine flüssige Bewegung zu erhalten, da die erste Bewegungstrajektorie als eine einziger Polynomzug über den ersten und den zweiten Abschnitt ermittelt wird. Diese Spline ist in jedem Punkt stetig differenzierbar, sodass ein aktives Überschleifen, bei dem eine Überschleifdistanz vorgegeben wird, nicht erfolgen muss. Typischerweise bildet ein stetig undifferenzierbarer Punkt einer Bewegungstrajektorie einen Anhaltepunkt der Vorrichtung, da eine Geschwindigkeit in diesem Punkt sich sprunghaft verändert. Eine Beschleunigung in diesem Punkt kann durch eine Delta-Distribution beschrieben werden, die Beschleunigung kann also beliebige Werte annehmen.

Obwohl beim rechnergestützten Verfahren zum Ermitteln der Bewegung der Vorrichtung kein aktives Überschleifen erfolgt, kann es sein, dass das Werkzeug im zweiten Abschnitt der ersten Bewegungstrajektorie einen Prozess unter Einhaltung einer Prozesstoleranz durchführen muss. Diese Prozesstoleranz muss beim Übergang vom ersten Abschnitt zum zweiten Abschnitt eingehalten werden. Die Prozesstoleranz kann also als Überschleifdistanz verstanden werden.

In einer Ausführungsform weist der zweite Abschnitt der zweiten Bewegungstrajektorie einen ersten Teilabschnitt und einen zweiten Teilabschnitt auf. Der erste Abschnitt der ersten Bewegungstrajektorie ist zwischen dem ersten Teilabschnitt und dem zweiten Teilabschnitt des zweiten Abschnitts der zweiten Bewegungstrajektorie ausgebildet.

Das Werkzeug kann beim Bewegen entlang des ersten Teilabschnitts beispielsweise einen ersten Prozess an einem ersten Ort durchführen. Anschließend kann das Werkzeug durch bewegen entlang des ersten Abschnitts im Freiraum bewegt werden, um an einem zweiten Ort einen zweiten Prozess durchzuführen. Beim Durchführen des zweiten Prozesses kann das Werkzeug entlang des zweiten Teilabschnitts bewegt werden. Vorteilhafterweise kann diese zusammengesetzte Bewegung des Werkzeugs erfolgen, ohne die Vorrichtung anzuhalten. Auch andere zusammengesetzte Bewegungen mit einer beliebigen Anzahl von Teilabschnitten des ersten Abschnitts der ersten Bewegungstrajektorie und/oder einer beliebigen Anzahl von Teilabschnitten des zweiten Abschnitts der zweiten Bewegungstrajektorie sind möglich.

In einer Ausführungsform ist der erste Konfigurationsraum ein auf zumindest zwei translatorische und/oder rotatorische Bewegungsachsen der Vorrichtung bezogenes Koordinatensystem. Der zweite Konfigurationsraum ist ein kartesisches Koordinatensystem oder ein Koordinatensystem mit generalisierten Koordinaten. Der erste Konfigurationsraum kann also entweder nur auf zwei translatorische Bewegungsachsen, nur auf zwei rotatorische Bewegungsachsen oder eine translatorische Bewegungsachse und eine rotatorische Bewegungsachse bezogen sein. Alternativ ist der erste Konfigurationsraum ein kartesisches Koordinatensystem oder ein Koordinatensystem mit generalisierten Koordinaten und der zweite Konfigurationsraum der Achsenraum. Generalisierte Koordinaten können beispielsweise Kugel- oder Zylinderkoordinaten sein. Diese können den Vorteil bieten, dass beispielsweise eine Bewegung des Werkzeugs auf einer Kugeloberfläche einfacher beschrieben werden kann. In einer Ausführungsform wird eine weitere erste Bewegungstrajektorie im ersten Konfigurationsraum ermittelt, wenn die erste Bewegungstrajektorie die vorgegebene erste Randbedingung nicht erfüllt. Beim Ermitteln der weiteren ersten Bewegungstrajektorie wird der vorgegebene Parameter der Bewegung des Werkzeugs unter Einhaltung der vorgegebenen ersten Randbedingung optimiert.

In einer Ausführungsform wird beim Prüfen, ob die erste Bewegungstrajektorie die vorgegebene erste Randbedingung erfüllt, geprüft, ob das Werkzeug derart entlang der ersten Bewegungstrajektorie bewegt werden kann, dass die Vorrichtung kollisionsfrei bewegt wird.

In einer Ausführungsform erfolgt das Ermitteln der weiteren ersten Bewegungstrajektorie derart, dass die Vorrichtung beim Bewegen des Werkzeugs entlang der weiteren ersten Bewegungstrajektorie um ein Hindernis herum bewegt wird. Vorteilhafterweise kann eine Beschädigung der Vorrichtung und/oder des Hindernisses vermieden werden.

In einer Ausführungsform erfolgt das Ermitteln der weiteren ersten Bewegungstrajektorie mittels Spline-Interpolation. Im Rahmen der Spline-Interpolation wird zumindest eine erste Stützstelle vorgegeben. Die erste Stützstelle wird derart gewählt, dass die Vorrichtung beim Bewegen des Werkzeugs entlang der weiteren ersten Bewegungstrajektorie um das Hindernis herum bewegt wird.

In einer Ausführungsform wird eine zusätzliche erste Bewegungstrajektorie im ersten Konfigurationsraum ermittelt, wenn die zweite Bewegungstrajektorie die vorgegebene zweite Randbedingung nicht erfüllt. Beim Ermitteln der zusätzlichen ersten Bewegungstrajektorie wird der vorgegebenen Parameter der Bewegung des Werkzeugs unter Einhaltung der vorgegebenen zweiten Randbedingung optimiert.

In einer Ausführungsform wird beim Prüfen, ob die zweite Bewegungstrajektorie die vorgegebene zweite Randbedingung erfüllt, geprüft, ob das Werkzeug derart entlang der zweiten Bewegungstrajektorie bewegt werden kann, dass eine vorgegebene Prozesstoleranz eingehalten wird.

In einer Ausführungsform wird beim Prüfen, ob das Werkzeug derart entlang der zweiten Bewegungstrajektorie bewegt werden kann, dass die vorgegebene Prozesstoleranz eingehalten wird, geprüft, ob ein vorgegebener Pfad und/oder eine vorgegebene Geschwindigkeit und/oder eine vorgegebene Beschleunigung der Vorrichtung oder des Werkzeugs eingehalten werden.

Der vorgegebene Pfad kann beispielsweise ein Weg sein, entlang dessen das Werkzeug einen Prozess gegebenenfalls unter Einhaltung einer gewissen Toleranz verrichten soll. Der vorgegebene Pfad kann also ein Streifen im zweiten Konfigurationsraum sein, innerhalb dessen das Werkzeug bewegt werden soll.

In einer Ausführungsform erfolgt das Ermitteln der zusätzlichen ersten Bewegungstrajektorie durch Anpassen der ersten Bewegungstrajektorie. Das Anpassen der ersten Bewegungstrajektorie erfolgt derart, dass beim Bewegen des Werkzeugs entlang der zusätzlichen ersten Bewegungstrajektorie die vorgegebene Prozesstoleranz eingehalten wird.

In einer Ausführungsform erfolgt das Anpassen der ersten Bewegungstrajektorie derart, dass die Vorrichtung oder das Werkzeug beim Bewegen des Werkzeugs entlang der zusätzlichen ersten Bewegungstrajektorie den vorgegebenen Pfad und/oder die vorgegebene Geschwindigkeit und/oder die vorgegebene Beschleunigung einhält.

In einer Ausführungsform erfolgt das Anpassen der ersten Bewegungstrajektorie mittels Spline-Interpolation. Im Rahmen der Spline-Interpolation wird zumindest eine zweite Stützstelle vorgegeben. Die zweite Stützstelle wird derart gewählt, dass das Werkzeug entlang der zusätzlichen ersten Bewegungstrajektorie unter Einhaltung des vorgegebenen Pfads und/oder der vorgegebenen Geschwindigkeit und/oder der vorgegeben Beschleunigung der Vorrichtung oder des Werkzeugs bewegt wird.

In einer Ausführungsform werden Bewegungsmittel des Werkzeugs von einem Prozessor in der Weise angesteuert, dass das Werkzeug entlang der ersten und/oder zweiten Bewegungstrajektorie bewegt wird.

Ein Computerprogrammprodukt umfasst Befehle, die bei der Ausführung des Computerprogramms durch einen Computer diesen dazu veranlassen, das rechnergestützte Verfahren zum Ermitteln einer Bewegung einer Vorrichtung auszuführen.

Ein System zur Datenverarbeitung umfasst einen Prozessor, der dazu ausgebildet ist, das rechnergestützte Verfahren zum Planen einer Bewegung einer Vorrichtung auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: eine Vorrichtung mit translatorischen und rotatorischen Bewegungsachsen zeigt;
- FIG 2: ein Schema eines rechnergestützten Verfahrens zum Ermitteln einer Bewegung einer Vorrichtung zeigt;
- FIG 3: eine vorgegebene Bewegung einer Vorrichtung anhand einer ersten Trajektorie in einem ersten Konfigurationsraum und einer zweiten Trajektorie in einem zweiten Konfigurationsraum zeigt;
- FIG 4: ein Ermitteln einer ersten und einer zweiten Bewegungstrajektorie und ein Prüfen der ersten Bewegungstrajektorie hinsichtlich einer vorgegebenen ersten Randbedingung und ein Prüfen der zweiten Bewegungstrajektorie hinsichtlich einer vorgegebenen zweiten Randbedingung zeigt;
- FIG 5: eine Alternative, bei der das Prüfen der ersten Bewegungstrajektorie hinsichtlich der vorgegebenen zweiten Randbedingung und das Prüfen der zweiten Bewegungstrajektorie hinsichtlich der vorgegebenen ersten Randbedingung erfolgt, zeigt;
- FIG 6: ein Ermitteln einer weiteren ersten und einer weiteren zweiten Bewegungstrajektorie zeigt;
- FIG 7: ein Ermitteln einer zusätzlichen ersten und einer zusätzlichen zweiten Bewegungstrajektorie zeigt;
- FIG 8: ein Festlegen unterschiedlicher Abschnitte einer Bewegung in unterschiedlichen Konfigurationsräumen zeigt;
- FIG 9: eine Variante des Festlegens unterschiedlicher Abschnitte einer Bewegung in unterschiedlichen Konfigurationsräumen zeigt;
- FIG 10: ein Ermitteln einer ersten und einer zweiten Bewegungstrajektorie über den ersten und den zweiten Konfigurationsraum auf Grundlage der Festlegung gemäß FIG 9 zeigt;
- FIG 11: ein Computerprogrammprodukt zum Ausführen des Verfahrens zum Planen einer Bewegung einer Vorrichtung zeigt; und
- FIG 12: ein System zur Datenverarbeitung zum Ausführen des Verfahrens zum Planen einer Bewegung einer Vorrichtung zeigt.

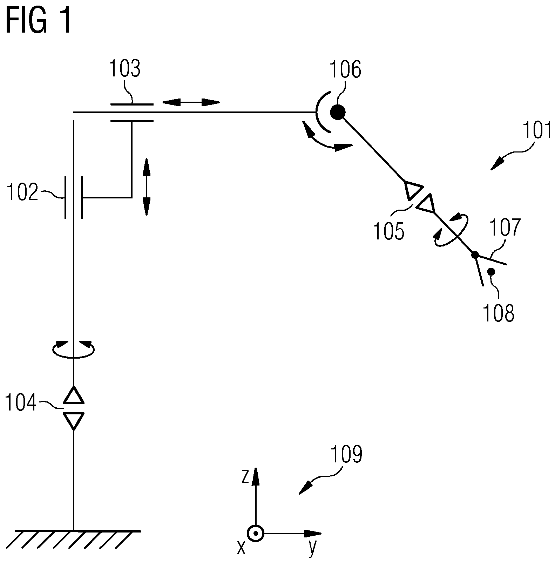

FIG 1 zeigt schematisch einen kinematischen Aufbau einer beispielhaften Vorrichtung 101 mit einem über translatorische Bewegungsachsen 102, 103 und rotatorische Bewegungsachsen 104, 105, 106 der Vorrichtung 101 bewegbaren Werkzeug 107. Bewegungsmittel wie Motoren und Antriebe der Vorrichtung 101 sind in FIG 1 der Einfachheit halber nicht gezeigt. Die Vorrichtung 101 kann als Roboter, als Gelenkroboter oder als jede andere Art von Vorrichtung 101 ausgebildet sein, die das Werkzeug 107 über translatorische und/oder rotatorische Bewegungsachsen 102, 103, 104, 105, 106 bewegen kann. Die translatorischen Bewegungsachsen 102, 103 sind als Lineargelenke ausgebildet. Die rotatorischen Bewegungsachsen 104, 105, 106 können in Form von Gelenken oder Scharnieren ausgebildet sein. Zwischen zwei Gelenken der Vorrichtung 101 sind starre Verbindungselemente ausgebildet. Bewegungsmöglichkeiten der Verbindungselemente sind in FIG 1 mit Doppelpfeilen angedeutet.

Die Vorrichtung 101 weist beispielhaft eine erste Translationsachse 102 und eine zweite Translationsachse 103 auf. Die Vorrichtung 101 kann jedoch abweichend von der Darstellung der FIG 1 eine beliebige Anzahl von Translationsachsen aufweisen, beispielsweise kann die Vorrichtung 101 keine, nur eine oder drei Translationsachsen aufweisen. Die Translationsachsen 102, 103 können auch als translatorische Gelenke oder Lineargelenke bezeichnet werden und zeichnen sich dadurch aus, dass ein nachfolgendes Verbindungselement der Vorrichtung 101 entlang einer Geraden bewegbar ist. Ein der ersten Translationsachse 102 nachfolgendes Verbindungselement der Vorrichtung 101 lässt sich entlang einer in FIG 1 dargestellten z-Richtung bewegen. Das der ersten Translationsachse 102 nachfolgende Verbindungselement ist bei der beispielhaften Vorrichtung 101 gewinkelt ausgebildet und verbindet die erste Translationsachse 102 mit der zweiten Translationsachse 103. Ein der zweiten Translationsachse 103 nachfolgendes Verbindungselement der Vorrichtung 101 lässt sich entlang einer in FIG 1 dargestellten y-Richtung bewegen. Das der zweiten Translationsachse 102 nachfolgende Verbindungselement ist bei der beispielhaften Vorrichtung 101 geradlinig ausgebildet und verbindet die zweite Translationsachse 103 mit einer dritten Rotationsachse 106.

Die Vorrichtung 101 weist beispielhaft eine erste Rotationsachse 104, eine zweite Rotationsachse 105 und die dritte Rotationsachse 106 auf. Die erste und die zweite Rotationsachse 104, 105 sind beispielhaft als fluchtende Rotationsachsen ausgebildet, während die dritte Rotationsachse 106 beispielhaft als nicht fluchtende Rotationsachse ausgebildet ist. Die Vorrichtung 101 kann jedoch abweichend von der Darstellung der FIG 1 eine beliebige Anzahl von fluchtenden und nicht fluchtenden Rotationsachsen aufweisen. Eine fluchtende Rotationsachse 104, 105 zeichnet sich dadurch aus, dass ein nachfolgendes Verbindungselement um eine entlang des nachfolgenden Verbindungselements verlaufende Achse drehbar ist. Fluchtende Rotationsachsen können auch als Drehgelenke bezeichnet werden. Eine nicht fluchtende Rotationsachse 106 zeichnet sich dadurch aus, dass ein nachfolgendes Verbindungselement entlang einer senkrecht zum nachfolgenden Verbindungselement verlaufenden Achse drehbar ist. Nicht fluchtende Rotationsachsen können auch als Klappgelenke bezeichnet werden. In der Darstellung der FIG 1 kann ein der nicht fluchtenden Rotationsachse 106 nachfolgendes Verbindungselement der Vorrichtung 101 um eine entlang einer in FIG 1 gezeigten x-Richtung ausgebildete Achse gedreht werden. Die Vorrichtung 101 kann jedoch auch andersartig ausgebildete Rotationsachsen aufweisen, beispielsweise Kugelgelenke.

Das Werkzeug 107 kann auch als Endeffektor bezeichnet werden. Das Werkzeug 107 der Vorrichtung 101 ist beispielhaft als Greifer ausgebildet. Das Werkzeug 107 kann jedoch beispielsweise auch als Fräse, als Bohrer, als Sprühkopf, als Schweißkopf, als Laser, als Wasserstrahlschneidkopf, als Messwerkzeug oder als ein anderes Werkzeug 107 ausgebildet sein. Das Werkzeug 107 kann auch als optischer Sensor ausgebildet sein, beispielsweise kann das Werkzeug 107 als Röntgenscanner ausgebildet sein und im Rahmen bildgebender Verfahren in der Medizin verwendet werden.

Eine Bewegung der Vorrichtung 101 kann in verschiedenen Konfigurationsräumen ermittelt und dargestellt werden. Dabei wird eine Bewegungstrajektorie eines der Vorrichtung 101 zugeordneten Raumpunkts 108 ermittelt und dargestellt. Beispielsweise kann der der Vorrichtung 101 zugeordnete Raumpunkt 108 ein Werkzeugmittelpunkt (englisch *tool center point,* TCP) sein, der schematisch in FIG 1 gezeigt ist. Es kann zweckmäßig sein, dass der der Vorrichtung 101 zugeordnete Raumpunkt 108 ein dem Werkzeug 107 zugeordneter Raumpunkt 108 ist, da im Rahmen eines mittels des Werkzeugs 107 durchzuführenden Prozesses eine Bewegung des Werkzeugs 107 relevant ist. Der Raumpunkt 108 kann jedoch einem beliebigen Teil der Vorrichtung 101, beispielsweise einem Verbindungselement, zugeordnet sein.

Ein erster Konfigurationsraum kann beispielsweise ein auf die Bewegungsachsen 102, 103, 104, 105, 106 bezogenes Koordinatensystem sein. Ein solches Koordinatensystem kann auch als Achsensystem bezeichnet werden. Die Darstellung der Bewegungstrajektorie des Raumpunkts 108 erfolgt also in einem multidimensionalen Achsenraum. Auf die in FIG 1 gezeigte Vorrichtung 101 bezogen, weist das Achsensystem der Vorrichtung 101 fünf Koordinatenachsen auf. Auf die Bewegungsachsen 102, 103, 104, 105, 106 bezogene Koordinaten geben eine Konfigurationsposition der Vorrichtung 101 an. Eine Position des dem Werkzeug 107 zugeordneten Raumpunkts 108 kann also durch eine entsprechende Konfigurationsposition der Vorrichtung 101 im Achsenraum angegeben werden.

Ein zweiter Konfigurationsraum kann beispielsweise, wie in FIG 1 beispielhaft dargestellt, ein kartesisches Koordinatensystem 109 sein, dessen Ursprung frei wählbar ist. Der zweite Konfigurationsraum kann auch als Weltkoordinatensystem oder ortsfestes Basiskoordinatensystem bezeichnet werden. Anstatt eines kartesischen Koordinatensystems 109 kann der zweite Konfigurationsraum auch ein Koordinatensystem mit generalisierten Koordinaten sein. Die generalisierten Koordinaten können beispielsweise Kugelkoordinaten oder Zylinderkoordinaten sein. Dies kann beispielsweise dann zweckdienlich sein, wenn der dem Werkzeug 107 zugeordnete Raumpunkt 108 entlang einer auf einer Kugeloberfläche oder auf einer Zylinderoberfläche befindlichen Bewegungstrajektorie bewegt werden soll.

Eine Bewegung des Raumpunkts 108 kann im Achsenraum oder im ortsfesten Basiskoordinatensystem dargestellt werden. Eine im Achsenraum dargestellte Bewegungstrajektorie kann mittels direkter Kinematik in das ortsfeste Basiskoordinatensystem transformiert werden. Umgekehrt kann eine im ortsfesten Basiskoordinatensystem dargestellte Bewegungstrajektorie mittels inverser Kinematik in den Achsenraum transformiert werden. Solche Koordinatentransformationen können beispielsweise mittels einer Matrixmultiplikation erfolgen. Dabei wird beispielsweise eine Konfigurationsposition mit einer Transformationsmatrix multipliziert, wodurch eine Position im ortsfesten Basiskoordinatensystem ermittelt wird.

Eine Transformation vom Achsenraum in das ortsfeste Basiskoordinatensystem mittels direkter Kinematik ist eindeutig, d.h., dass jeder Konfigurationsposition im Achsenraum eine eindeutige Position im ortsfesten Basiskoordinatensystem, eine sogenannte Werkzeugpose, zugeordnet werden kann. Umgekehrt kann eine Transformation vom ortsfesten Basiskoordinatensystem in den Achsenraum mittels inverser Kinematik mehrdeutig sein, d.h. dass einer Werkzeugpose im ortsfesten Basiskoordinatensystem unter Umständen eine Mehrzahl möglicher Konfigurationspositionen im Achsenraum zugeordnet werden kann. Eine solche Mehrdeutigkeit liegt bei der in FIG 1 dargestellten Vorrichtung 101 beispielsweise für die zweite Rotationsachse 105 vor, da eine Position des dem Werkzeug 107 zugeordneten Raumpunkts 108 sich nicht verändert, wenn ein auf die zweite Rotationsachse 105 bezogener Winkel variiert wird. Außerdem kann es sein, dass im Rahmen der Transformation vom ortsfesten Basiskoordinatensystem in den Achsenraum mittels inverser Kinematik für eine Werkzeugpose im ortsfesten Basiskoordinatensystem keine Konfigurationsposition im Achsenraum ermittelt werden kann.

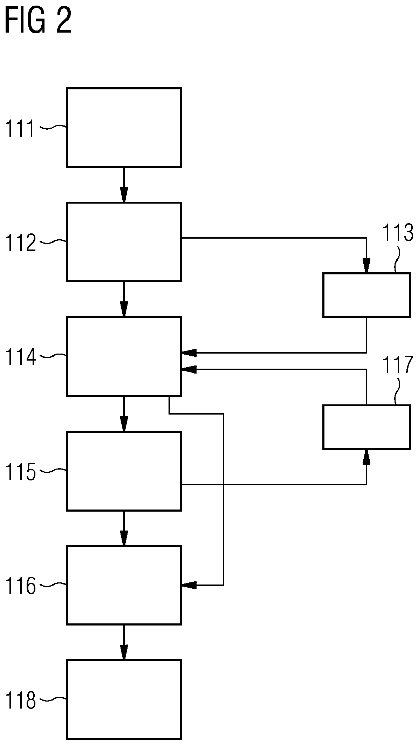

FIG 2 zeigt schematisch ein rechnergestütztes Verfahren zum Ermitteln einer Bewegung einer Vorrichtung.

In einem ersten Verfahrensschritt 111 wird eine erste Bewegungstrajektorie des Werkzeugs in einem ersten Konfigurationsraum ermittelt. Beim Ermitteln der ersten Bewegungstrajektorie wird ein vorgegebener Parameter einer Bewegung des Werkzeugs optimiert.

In einem zweiten Verfahrensschritt 112 wird geprüft, ob die erste Bewegungstrajektorie zumindest eine vorgegebene erste Randbedingung erfüllt. Erfüllt die erste Bewegungstrajektorie die vorgegebene erste Randbedingung, folgt ein vierter Verfahrensschritt 114 auf den zweiten Verfahrensschritt 112.

In einem optionalen dritten Verfahrensschritt 113 wird eine weitere erste Bewegungstrajektorie im ersten Konfigurationsraum ermittelt, wenn die erste Bewegungstrajektorie die vorgegebene erste Randbedingung nicht erfüllt. Beim Ermitteln der weiteren ersten Bewegungstrajektorie wird der vorgegebene Parameter der Bewegung des Werkzeugs unter Einhaltung der vorgegebenen ersten Randbedingung optimiert. Die weitere erste Bewegungstrajektorie erfüllt also die vorgegebene erste Randbedingung stets. Auf den dritten Verfahrensschritt 113 folgt der vierte Verfahrensschritt 114.

Im Rahmen des vierten Verfahrensschritts 114 wird eine zweite Bewegungstrajektorie des Werkzeugs in einem zweiten Konfigurationsraum durch Transformieren der ersten Bewegungstrajektorie in den zweiten Konfigurationsraum ermittelt. Alternativ wird die weitere erste Bewegungstrajektorie in den zweiten Konfigurationsraum transformiert, wenn vor dem vierten Verfahrensschritt 114 der dritte Verfahrensschritt 113 erfolgte. In diesem Fall wird also eine weitere zweite Bewegungstrajektorie durch die Transformation der weiteren ersten Bewegungstrajektorie ermittelt.

In einem fünften Verfahrensschritt 115 wird geprüft, ob die zweite Bewegungstrajektorie bzw. die weitere zweite Bewegungstrajektorie zumindest eine vorgegebene zweite Randbedingung erfüllt. Erfüllt die zweite Bewegungstrajektorie bzw. die weitere zweite Bewegungstrajektorie die vorgegebene zweite Randbedingung, folgt auf den fünften Verfahrensschritt 115 ein sechster Verfahrensschritt 116.

In einem optionalen siebten Verfahrensschritt 117 wird eine zusätzliche erste Bewegungstrajektorie im ersten Konfigurationsraum ermittelt, wenn die zweite Bewegungstrajektorie bzw. die weitere zweite Bewegungstrajektorie die vorgegebene zweite Randbedingung nicht erfüllt. Beim Ermitteln der zusätzlichen ersten Bewegungstrajektorie wird der vorgegebene Parameter der Bewegung des Werkzeugs unter Einhaltung der zweiten Randbedingung optimiert. Im Anschluss an den siebten Verfahrensschritt 117 erfolgt der vierte Verfahrensschritt 114, d.h. die zusätzliche erste Bewegungstrajektorie wird in den zweiten Konfigurationsraum transformiert, wodurch eine zusätzliche zweite Bewegungstrajektorie ermittelt wird. Werden der siebte Verfahrensschritt 117 und im Anschluss daran der vierte Verfahrensschritt 114 durchgeführt, so folgt auf den vierten Verfahrensschritt der sechste Verfahrensschritt 116.

Im sechsten Verfahrensschritt 116 werden die erste Bewegungstrajektorie und/oder die zweite Bewegungstrajektorie bzw. die weitere erste und/oder die weitere zweite Bewegungstrajektorie oder die zusätzliche erste und/oder die zusätzliche zweite Bewegungstrajektorie zum Bewegen des Werkzeugs bereitgestellt, wenn die zweite Bewegungstrajektorie bzw. die weitere zweite Bewegungstrajektorie die vorgegebene zweite Randbedingung erfüllt. Die zusätzliche zweite Bewegungstrajektorie erfüllt die zweite Randbedingung stets.

Das Bereitstellen einer Bewegungstrajektorie bedeutet im Kontext der gesamten Beschreibung, dass die Bewegungstrajektorie einem Prozessor bereitgestellt wird, der dazu ausgebildet ist, die Vorrichtung in der Weise anzusteuern, dass das Werkzeug entlang der ermittelten ersten und/oder zweiten Bewegungstrajektorie bewegt wird.

In einem optionalen achten Verfahrensschritt 118 wird das Werkzeug entlang der ersten Bewegungstrajektorie bzw. entlang der weiteren ersten Bewegungstrajektorie oder der zusätzlichen ersten Bewegungstrajektorie bewegt. Das Bewegen des Werkzeugs erfolgt durch den Prozessor mithilfe der Bewegungsmittel. Anhand der bereitgestellten Bewegungstrajektorie sendet der Prozessor Steuersignale an die Bewegungsmittel der Vorrichtung, um die Vorrichtung gemäß der bereitgestellten Bewegungstrajektorie zu bewegen. Nachfolgend wird das in FIG 2 gezeigte rechnergestützte Verfahren zum Ermitteln einer Bewegung einer Vorrichtung im Detail erläutert. Das Verfahren kann beispielsweise auf die in FIG 1 gezeigte Vorrichtung 101 angewendet werden. Aufgrund des fünfdimensionalen Achsenraumes der Vorrichtung 101 sind jedoch Bewegungstrajektorien im Achsenraum nicht unmittelbar graphisch darstellbar. Aus diesem Grund wird das Verfahren nachfolgend beispielhaft anhand einer zweiachsigen Vorrichtung erläutert und innerhalb einer Ebene im tatsächlichen Raum geplant. Das Verfahren ist jedoch nicht auf Bewegungen einer zweiachsigen Vorrichtung oder Bewegungen einer anderen Vorrichtung in einer Ebene beschränkt.

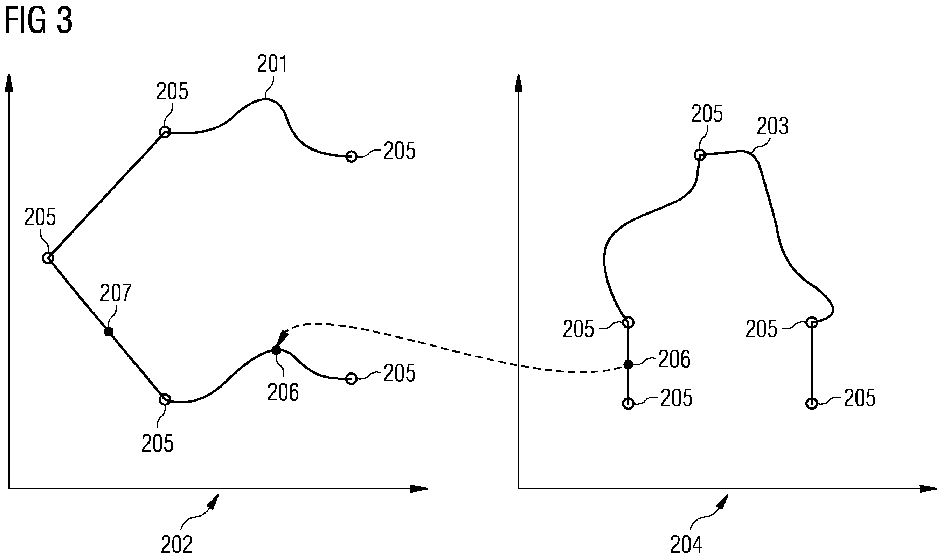

FIG 3 zeigt schematisch den ersten Konfigurationsraum 202 und den zweiten Konfigurationsraum 204. Beide Konfigurationsräume 202, 204 weisen jeweils zwei Koordinatenachsen auf. Im ersten Konfigurationsraum 202 ist eine vorgegebene Bewegung der zweiachsigen Vorrichtung anhand einer ersten Trajektorie 201 festgelegt. Die gleiche vorgegebene Bewegung ist anhand einer zweiten Trajektorie 203 im zweiten Konfigurationsraum 204 festgelegt. Die Trajektorien 201, 203 beziehen sich auf einen der Vorrichtung zugeordneten Raumpunkt. Beispielsweise beziehen sich die Trajektorien 201, 203 auf einen Werkzeugmittelpunkt des Werkzeugs der Vorrichtung.

Beim Ermitteln der Bewegung der Vorrichtung soll ein vorgegebener Parameter der Bewegung des Werkzeugs optimiert werden, d.h. der vorgegebene Parameter ist bei der vorgegebenen Bewegung nicht optimiert worden. Die vorläufige Bewegung kann, wie in FIG 3 beispielhaft gezeigt ist, mittels fünf vorgegebenen Konfigurationspositionen 205 erzeugt werden. Die vorgegebenen Konfigurationspositionen 205 können beispielsweise im Rahmen eines *Teach-In* Verfahrens ermittelt werden. Die vorgegebenen Konfigurationspositionen 205 sind in FIG 2 mittels Kreisringen gekennzeichnet. Die Abschnitte der Trajektorien 201, 203, die zwischen den vorgegebenen Konfigurationspositionen 205 ausgebildet sind, sind in FIG 3 willkürlich gewählt worden. Beispielhaft sind zwei Abschnitte der ersten Trajektorie 201 und zwei Abschnitte der zweiten Trajektorie 203 geradlinig ausgebildet.

Im Rahmen des ersten Verfahrensschritts wird die erste Bewegungstrajektorie des Werkzeugs der Vorrichtung, das über translatorische und/oder rotatorische Bewegungsachsen der Vorrichtung bewegbar ist, im ersten Konfigurationsraum 202 ermittelt.

Das Ermitteln der ersten Bewegungstrajektorie kann ein Auswählen eines Anfangspunkts und eines Endpunkts der ersten Bewegungstrajektorie umfassen. Als Anfangs- und Endpunkt können beliebige Punkte auf der ersten Trajektorie 201 und/oder der zweiten Trajektorie 203 gewählt werden, d.h. die zu ermittelnde erste Bewegungstrajektorie kann auf die gesamte erste bzw. zweite Trajektorie 201, 203 oder lediglich auf einen Teil der ersten bzw. zweiten Trajektorie 201, 203 bezogen sein. Das Auswählen des Anfangspunkts und/oder des Endpunkts kann ein Transformieren des Anfangspunkts und/oder des Endpunkts in den ersten Konfigurationsraum 202 umfassen, wenn der Anfangspunkt und/oder der Endpunkt im zweiten Konfigurationsraum 204 ausgewählt wurden.

Wird z.B. ein Anfangspunkt 206 im zweiten Konfigurationsraum 204 ausgewählt, dann wird der Anfangspunkt 206 in den ersten Konfigurationsraum 202 transformiert. Das Transformieren des Anfangspunkts 206 ist in FIG 3 mittels eines gestrichelten Pfeils angedeutet. Ein Endpunkt 207 der ersten Bewegungstrajektorie kann beispielsweise im ersten Konfigurationsraum 202 ausgewählt werden und muss nicht transformiert werden. Der Anfangspunkt 206 und der Endpunkt 207 der ersten Bewegungstrajektorie wurden beispielhaft derart ausgewählt, dass die erste Bewegungstrajektorie lediglich auf einen Teil der ersten bzw. der zweiten Trajektorie 201, 203 bezogen ist.

Beim Ermitteln der ersten Bewegungstrajektorie wird der vorgegebene Parameter der Bewegung des Werkzeugs optimiert. Der vorgegebene Parameter kann beispielsweise eine Zeit, innerhalb derer das Werkzeug vom Anfangspunkt 206 zum Endpunkt 207 bewegt werden soll, sein. In diesem Fall kann z.B. die Zeit minimiert werden, in der das Werkzeug entlang der ersten Bewegungstrajektorie vom Anfangspunkt 206 zum Endpunkt 207 bewegt werden soll. Der vorgegebene Parameter kann aber auch eine Energie sein, die dazu notwendig ist, das Werkzeug entlang der ersten Bewegungstrajektorie zu bewegen. In diesem Fall kann die Energie minimiert werden, die dazu notwendig ist, das Werkzeug entlang der ersten Bewegungstrajektorie zu bewegen. Der vorgegebene Parameter kann auch eine Weglänge sein. In diesem Fall kann die Weglänge der ersten Bewegungstrajektorie miniert werden.

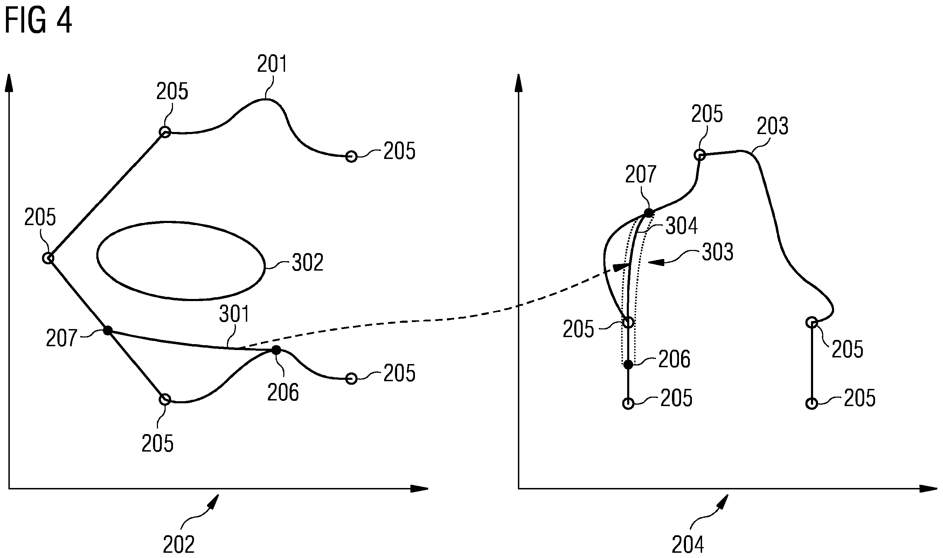

FIG 4 veranschaulicht schematisch weitere Verfahrensschritte des Verfahrens. FIG 4 zeigt bis auf die Transformation des Anfangspunkts 206 die in FIG 3 gezeigten Elemente, wobei die Bezugszeichen unverändert beibehalten werden. Im Vergleich zu FIG 3 zeigt FIG 4 auch zusätzliche Elemente.

Die erste Bewegungstrajektorie 301 des Werkzeugs zwischen dem Anfangspunkt 206 und dem Endpunkt 207 wurde ermittelt, wobei der vorgegebene Parameter optimiert wurde. Die erste Bewegungstrajektorie 301 kann beispielsweise mittels einer Spline-Interpolation ermittelt werden.

Im Rahmen des zweiten Verfahrensschritts wird geprüft, ob die erste Bewegungstrajektorie 301 zumindest die vorgegebene erste Randbedingung erfüllt. Dazu kann beispielsweise geprüft werden, ob das Werkzeug derart entlang der ersten Bewegungstrajektorie 301 bewegt werden kann, dass die Vorrichtung kollisionsfrei bewegt wird.

In FIG 4 ist im ersten Konfigurationsraum 202 ein beispielhaftes Hindernis 302 dargestellt. Das Hindernis 302 kann beispielsweise ein in der Nähe der Vorrichtung angeordnetes Objekt sein. Beim Prüfen, ob das Werkzeug derart entlang der ersten Bewegungstrajektorie 301 bewegt werden kann, dass die Vorrichtung kollisionsfrei bewegt wird, wird geprüft, ob ein Teil der Vorrichtung mit dem Hindernis 302 kollidiert. Da sich die erste Bewegungstrajektorie 301 lediglich auf einen dem Werkzeug zugeordneten Raumpunkt bezieht, kann anhand der im ersten Konfigurationsraum 202 dargestellten ersten Bewegungstrajektorie 301 und des im ersten Konfigurationsraum 202 schematisch dargestellten Hindernisses 302 nur darauf geschlossen werden, ob der dem Werkzeug zugeordnete Raumpunkt mit dem Hindernis 302 kollidiert oder nicht, nicht aber ob ein weiterer Teil der Vorrichtung mit dem Hindernis 302 kollidiert. D.h., dass beim Prüfen, ob das Werkzeug derart entlang der ersten Bewegungstrajektorie 301 bewegt werden kann, dass die Vorrichtung kollisionsfrei bewegt wird, geprüft wird, ob ein beliebiger der Vorrichtung zugeordneter Raumpunkt mit dem Hindernis 302 kollidiert oder nicht. Beispielsweise kann ein Verbindungselement der Vorrichtung mit dem Hindernis 302 kollidieren.

Im Rahmen des vierten Verfahrensschritts wird die zweite Bewegungstrajektorie 304 des Werkzeugs im zweiten Konfigurationsraum 204 durch Transformieren der ersten Bewegungstrajektorie 301 in den zweiten Konfigurationsraum 204 ermittelt, wenn die erste Bewegungstrajektorie 301 die vorgegebene erste Randbedingung erfüllt.

Kann das Werkzeug also beispielsweise derart entlang der ersten Bewegungstrajektorie 301 bewegt werden, dass die Vorrichtung kollisionsfrei bewegt wird, wird die erste Bewegungstrajektorie 301 in den zweiten Konfigurationsraum 204 transformiert. Das Transformieren der ersten Bewegungstrajektorie 301 in den zweiten Konfigurationsraum 204 ist in FIG 4 anhand eines gestrichelten Pfeils angedeutet, d.h. die erste Bewegungstrajektorie 301 erfüllt die vorgegebene erste Randbedingung. Das Transformieren der ersten Bewegungstrajektorie erfolgt durch eine Koordinatentransformation, beispielsweise durch eine Matrixmultiplikation von Positionen auf der ersten Bewegungstrajektorie.

Im Rahmen des fünften Verfahrensschritts wird geprüft, ob die zweite Bewegungstrajektorie 304 die vorgegebene zweite Randbedingung erfüllt. Dabei kann beispielsweise geprüft werden, ob das Werkzeug derart entlang der zweiten Bewegungstrajektorie 304 bewegt werden kann, dass eine vorgegebene Prozesstoleranz eingehalten wird.

Als vorgegebene Prozesstoleranz kann beispielsweise überprüft werden, ob ein vorgegebener Pfad und/oder eine vorgegebene Geschwindigkeit und/oder eine vorgegeben Beschleunigung der Vorrichtung oder des Werkzeugs eingehalten werden. Der vorgegebene Pfad kann beispielsweise ein Pfad sein, entlang dessen das Werkzeug einen Prozess verrichten soll. Ist das Werkzeug beispielsweise ein Laser, der beispielsweise im Rahmen eines Laserablationsprozesses entlang einer Linie geführt werden soll, so ergibt sich der vorgegebene Pfad aus der Linie, entlang derer der Laser geführt werden soll und gegebenenfalls einer Toleranz, im Rahmen derer der Laser von der Linie abweichen darf. Beispielsweise kann es vorgegeben sein, dass der Laser maximal 100µm von der Linie abweichen darf. In FIG 4 ist im zweiten Konfigurationsraum 204 schematisch ein beispielhaft vorgegebener Pfad 303 anhand zweier gepunkteter Linien angedeutet, d.h. im dargestellten Beispiel muss der dem Werkzeug zugeordnete Raumpunkt innerhalb des vorgegebenen Pfads 303 bewegt werden.

Die vorgegebene Geschwindigkeit kann beispielsweise eine Geschwindigkeit des Werkzeugs sein, die im Rahmen eines Prozesses eingehalten werden muss. Das Werkzeug kann beispielsweise ein Sprühkopf sein, mit Hilfe dessen ein Sprühauftrag eines Lacks oder eines Klebers erfolgen soll. In diesem Beispiel kann als Prozesstoleranz vorgegeben sein, dass der Sprühkopf einen Geschwindigkeitsbereich einhalten muss, damit das aufzutragende Material gleichmäßig aufgetragen wird.

Die vorgegebene Beschleunigung kann beispielsweise eine Beschleunigung des Werkzeugs sein, die im Rahmen eines Prozesses eingehalten werden muss. Das Werkzeug kann beispielsweise als Greifer ausgebildet sein. Der Greifer kann dazu vorgesehen sein, mit Flüssigkeit befüllte, offene Behälter zu bewegen. Als Prozesstoleranz kann z.B. vorgegeben sein, dass der Greifer eine Maximalbeschleunigung nicht überschreitet, damit die Flüssigkeit im Behälter bleibt.

Der vorgegebene Pfad, die vorgegebene Geschwindigkeit und die vorgegeben Beschleunigung können sich entweder auf das Werkzeug oder auf die Vorrichtung, d.h. einen Teil der Vorrichtung, beispielsweise ein Verbindungselement, beziehen.

Im Rahmen des sechsten Verfahrensschritts des Verfahrens werden die erste Bewegungstrajektorie 301 und/oder die zweite Bewegungstrajektorie 304 zum Bewegen des Werkzeugs bereitgestellt. Dabei werden die Bewegungstrajektorien 301, 304 dem Prozessor bereitgestellt. Der Prozessor ist dazu ausgebildet, das Verfahren durchzuführen. Im Rahmen des achten Verfahrensschritts wird das Werkzeug entlang der ersten Bewegungstrajektorie 301 bewegt. Dazu sendet der Prozessor Steuersignale an die Motoren und Antriebe der Vorrichtung.

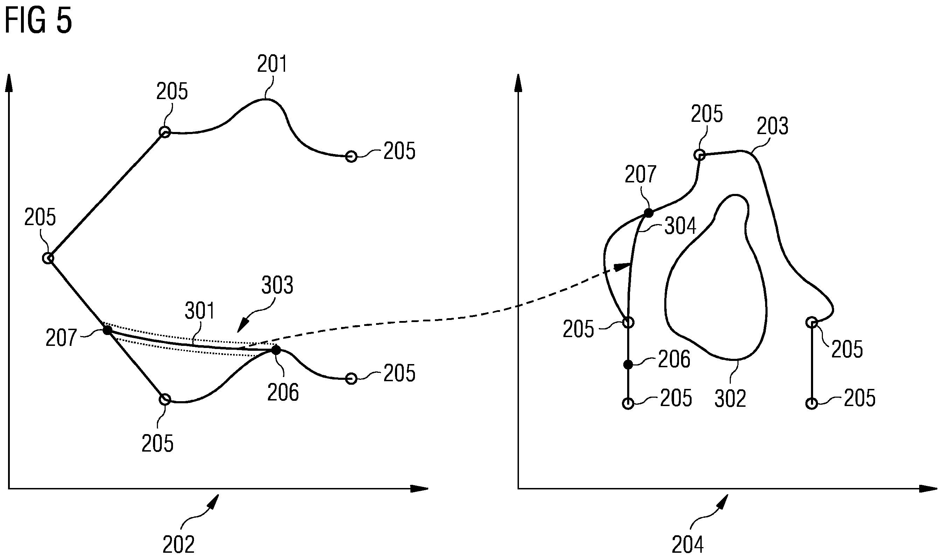

Eine Alternative besteht darin, dass zunächst geprüft wird, ob die erste Bewegungstrajektorie 301 die vorgegebene zweite Randbedingung erfüllt. Ist dies der Fall, wird die zweite Bewegungstrajektorie 304 durch Transformieren der ersten Bewegungstrajektorie 301 ermittelt. Zudem wird geprüft, ob die zweite Bewegungstrajektorie 304 die vorgegebene erste Randbedingung erfüllt. Dies ist schematisch in FIG 5 dargestellt. FIG 5 zeigt, dass geprüft wird, ob die erste Bewegungstrajektorie 301 beispielsweise die Prozesstoleranz einhält, was anhand des vorgegebenen Pfades 303, der die Prozesstoleranz beispielhaft andeutet, dargestellt ist.

Im Unterschied zu FIG 4 ist in FIG 5 das Hindernis 302 im zweiten Konfigurationsraum 204 dargestellt, da die zweite Bewegungstrajektorie 304 beispielsweise auf Kollisionsfreiheit überprüft wird, nachdem die zweite Bewegungstrajektorie 304 durch Transformieren der ersten Bewegungstrajektorie 301 ermittelt wurde. Das Hindernis 302 weist im zweiten Konfigurationsraum 204 eine andere Form als im ersten Konfigurationsraum 202 auf.

Im Rahmen des sechsten Verfahrensschritts werden bei dieser Alternative des Verfahrens die erste Bewegungstrajektorie 301 und/oder die zweite Bewegungstrajektorie 304 zum Bewegen des Werkzeugs dem Prozessor zur Steuerung der Vorrichtung bereitgestellt, wenn die zweite Bewegungstrajektorie 304 die vorgegebene erste Randbedingung erfüllt, wobei die zweite Bewegungstrajektorie 304 zuvor im dritten Verfahrensschritt durch Transformieren der ersten Bewegungstrajektorie 301 ermittelt wird, wenn die erste Bewegungstrajektorie 301 die vorgegebene zweite Randbedingung erfüllt.

Nachfolgend wird der optionale dritte Verfahrensschritt erläutert. Der dritte Verfahrensschritt wird beispielhaft ausgehend von den in FIG 4 bereits beschriebenen Verfahrensschritten erläutert. Der dritte Verfahrensschritt kann jedoch auch ausgehend von den in FIG 5 beschriebenen Verfahrensschritten durchgeführt werden. Dabei ist jeweils darauf zu achten, ob die erste Bewegungstrajektorie 301 oder die zweite Bewegungstrajektorie 304 die vorgegebene erste Randbedingung erfüllen soll.

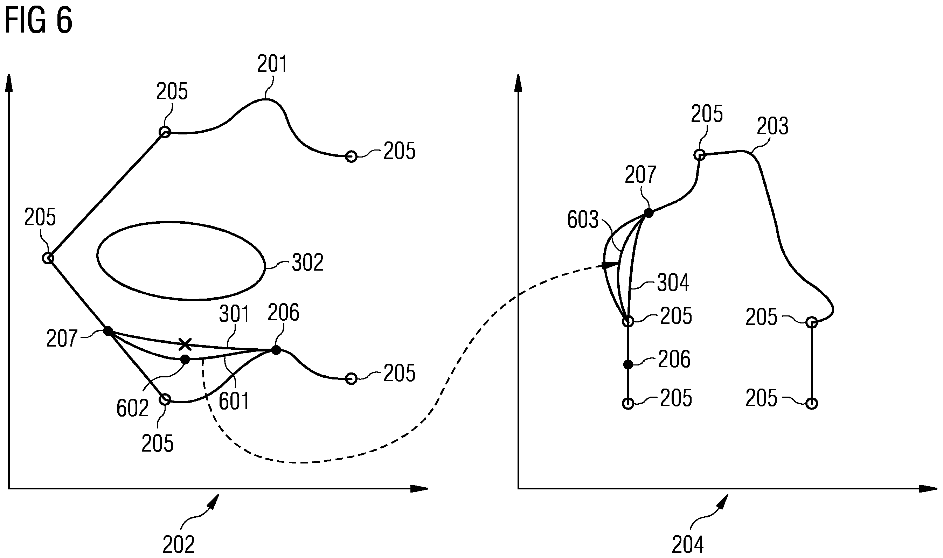

FIG 6 veranschaulicht schematisch den weiteren Verfahrensschritt. FIG 6 zeigt bis auf den vorgegeben Pfad 303 die Elemente der FIG 4, deren Bezugszeichen beibehalten werden. FIG 6 zeigt auch zusätzliche Elemente zu den in FIG 4 dargestellten Elementen.

Im Rahmen des dritten Verfahrensschritts wird eine weitere erste Bewegungstrajektorie 601 im ersten Konfigurationsraum 202 ermittelt, wenn die erste Bewegungstrajektorie 301 die vorgegebene erste Randbedingung nicht erfüllt. Beim Ermitteln der weiteren ersten Bewegungstrajektorie 601 wird der vorgegebene Parameter der Bewegung unter Einhaltung der vorgegebenen ersten Randbedingung optimiert.

Die Tatsache, dass die erste Bewegungstrajektorie 301 die vorgegebene erste Randbedingung nicht erfüllt, ist in FIG 6 mit einem Kreuz auf der ersten Bewegungstrajektorie 301 angedeutet. Die erste Bewegungstrajektorie 301 kann beispielsweise derart ermittelt worden sein, dass die Vorrichtung, beispielsweise ein Verbindungselement der Vorrichtung, beim Bewegen des Werkzeugs entlang der ersten Bewegungstrajektorie 301 mit dem Hindernis 302 kollidiert. In diesem Fall erfolgt das Ermitteln der weiteren ersten Bewegungstrajektorie 601 derart, dass die Vorrichtung beim Bewegen des Werkzeugs entlang der weiteren ersten Bewegungstrajektorie 601 um das Hindernis 302 herum bewegt wird.

Das Ermitteln der weiteren ersten Bewegungstrajektorie 601 kann beispielsweise mittels Spline-Interpolation erfolgen. Im Rahmen der Spline-Interpolation wird zumindest eine erste Stützstelle 602 vorgegeben. Die zumindest eine erste Stützstelle 602 wird derart gewählt, dass die Vorrichtung beim Bewegen des Werkzeugs entlang der weiteren ersten Bewegungstrajektorie 601 um das Hindernis 302 herum bewegt wird.

Alternativ kann das Ermitteln der weiteren ersten Bewegungstrajektorie 601 mittels einer Potentialfeldmethode erfolgen. Bei der Potentialfeldmethode werden ein Hindernis 302 und ein Anfangspunkt 206 formal jeweils als Quellen eines repulsiven Potentials behandelt, während ein Endpunkt 207 der Bewegung formal als Quelle eines attraktiven Potentials behandelt wird. Man erhält ein differenzierbares effektives Potential mit einem globalen Minimum am Endpunkt 207. Das Hindernis 302 repräsentiert ein Maximum des Potentials. Aus der virtuellen Kraft, die im effektiven Potential auf die Vorrichtung wirkt, können dann tatsächliche Kräfte und/oder Drehmomente ermittelt werden, die von Antrieben der Bewegungsachsen der Vorrichtung erzeugt werden, um das Werkzeug zu bewegen. Damit die Antriebe die Kräfte und/oder Drehmomente erzeugen können, sendet der Prozessor entsprechende Steuersignale an die Antriebe.

Nach dem Ermitteln der weiteren ersten Bewegungstrajektorie 601 wird eine weitere zweite Bewegungstrajektorie 603 durch Transformieren der weiteren ersten Bewegungstrajektorie 601 in den zweiten Konfigurationsraum 204 ermittelt. Dies ist in FIG 6 anhand eines gestrichelten Pfeils angedeutet. Nach dem Ermitteln der weiteren zweiten Bewegungstrajektorie 603 wird geprüft, ob die weitere zweite Bewegungstrajektorie 603 die vorgegebene zweite Randbedingung erfüllt. Ist dies der Fall, werden die weitere erste Bewegungstrajektorie 601 und/oder die weitere zweite Bewegungstrajektorie 603 zum Bewegen des Werkzeugs dem Prozessor bereitgestellt.

Nachfolgend wird der optionale siebte Verfahrensschritt erläutert. Der siebte Verfahrensschritt wird beispielhaft ausgehend von dem in FIG 6 dritten Verfahrensschritt erläutert. Der siebte Verfahrensschritt kann jedoch auch ausgehend von den in FIG 4 oder ausgehend von den in FIG 5 beschriebenen Verfahrensschritten durchgeführt werden. Dabei ist jeweils darauf zu achten, ob die erste Bewegungstrajektorie 301 oder die zweite Bewegungstrajektorie 304 die vorgegebene zweite Randbedingung erfüllen soll.

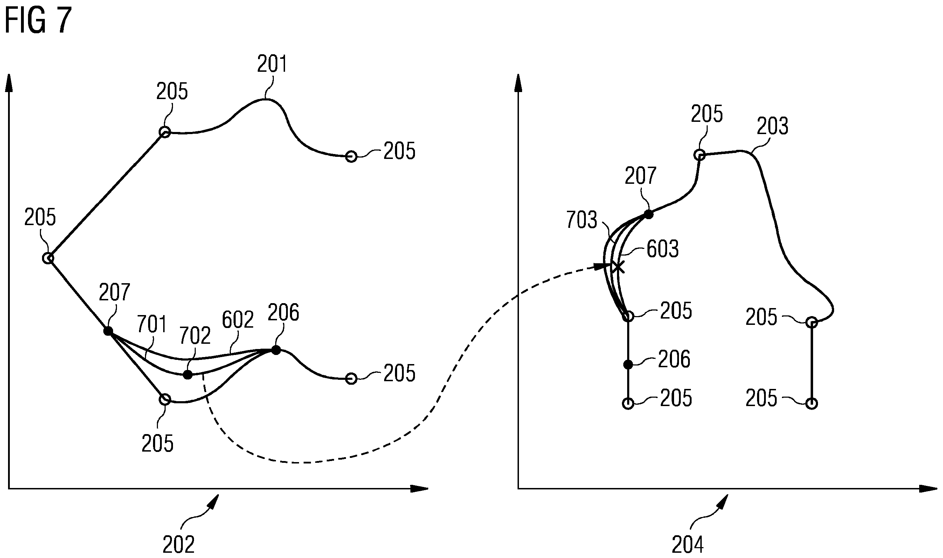

FIG 7 veranschaulicht schematisch den siebten Verfahrensschritt. Bis auf das Hindernis 302 enthält FIG 7 die Elemente der FIG 6, deren Bezugszeichen beibehalten werden. Zusätzlich zeigt FIG 7 weitere Elemente.

Im Rahmen des siebten Verfahrensschritts wird eine zusätzliche erste Bewegungstrajektorie 701 im ersten Konfigurationsraum 202 ermittelt, wenn die weitere zweite Bewegungstrajektorie 603 die vorgegebene zweite Randbedingung nicht erfüllt. Beim Ermitteln der zusätzlichen ersten Bewegungstrajektorie 701 wird der vorgegebenen Parameter der Bewegung unter Einhaltung der vorgegebenen zweiten Randbedingung optimiert.

Die Tatsache, dass die weitere zweite Bewegungstrajektorie 603 die vorgegebene zweite Randbedingung nicht erfüllt, ist in FIG 7 mit einem Kreuz auf der weiteren zweiten Bewegungstrajektorie 603 angedeutet. Das Ermitteln der zusätzlichen ersten Bewegungstrajektorie 701 kann durch Anpassen der weiteren ersten Bewegungstrajektorie 602 erfolgen. Das Anpassen der weiteren ersten Bewegungstrajektorie 602 kann derart erfolgen, dass die Vorrichtung oder das Werkzeug beim Bewegen des Werkzeugs entlang der zusätzlichen ersten Bewegungstrajektorie 701 die vorgegebene Prozesstoleranz einhält. Beispielsweise kann das Anpassen der weiteren ersten Bewegungstrajektorie 602 derart erfolgen, dass die Vorrichtung oder das Werkzeug beim Bewegen des Werkzeugs entlang der zusätzlichen ersten Bewegungstrajektorie 701 den vorgegebenen Pfad und/oder die vorgegebene Geschwindigkeit und/oder die vorgegebene Beschleunigung einhält.

Das Anpassen der weiteren ersten Bewegungstrajektorie 602 kann beispielsweise mittels Spline-Interpolation erfolgen. Im Rahmen der Spline-Interpolation wird zumindest eine zweite Stützstelle 702 vorgegeben. Die zumindest eine zweite Stützstelle 702 wird beispielsweise derart gewählt, dass das Werkzeug entlang der zusätzlichen ersten Bewegungstrajektorie 701 unter Einhaltung des vorgegebenen Pfads und/oder der vorgegebenen Geschwindigkeit und/oder der vorgegeben Beschleunigung der Vorrichtung oder des Werkzeugs bewegt wird. Beispielhaft ist in FIG 7 die zumindest eine zweite Stützstelle 702 im ersten Konfigurationsraum 202 gewählt worden. Die zweite Stützstelle 702 kann jedoch auch in einem zum ersten Konfigurationsraum 202 dazugehörigen Geschwindigkeitsraum oder Beschleunigungsraum gewählt werden. Im Geschwindigkeitsraum kann ein Geschwindigkeitsprofil und im Beschleunigungsraum ein Beschleunigungsprofil entlang der ersten Trajektorie 201 dargestellt werden.

Nach dem Ermitteln der zusätzlichen ersten Bewegungstrajektorie 701 wird eine zusätzliche zweite Bewegungstrajektorie 703 durch Transformieren der zusätzlichen ersten Bewegungstrajektorie 701 in den zweiten Konfigurationsraum 204 ermittelt. Dies ist in FIG 7 anhand eines gestrichelten Pfeils angedeutet. Nach dem Ermitteln der zusätzlichen zweiten Bewegungstrajektorie 703 werden die zusätzliche erste Bewegungstrajektorie 701 und/oder die zusätzliche zweite Bewegungstrajektorie 703 zum Bewegen des Werkzeugs dem Prozessor bereitgestellt.

Grundsätzlich können auch andere vorgegebene Randbedingungen als die in der Beschreibung beispielhaft genannten Randbedingungen im Rahmen des Verfahrens überprüft werden. Wichtig ist, dass zumindest eine Randbedingung im ersten Konfigurationsraum 202 und eine Randbedingung im zweiten Konfigurationsraum 204 überprüft werden.

Erfindungsgemäß wird eine erste Teilbewegung 801 des Werkzeugs durch einen ersten Abschnitt der ersten Bewegungstrajektorie festgelegt, während eine zweite Teilbewegung 802 des Werkzeugs durch einen zweiten Abschnitt der zweiten Bewegungstrajektorie festgelegt wird.

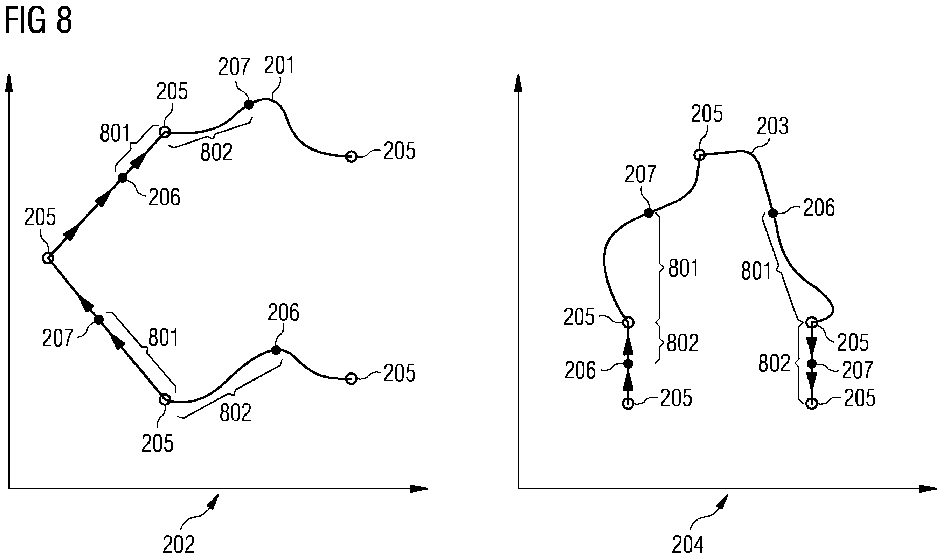

Dies ist in FIG 8 gezeigt. FIG 8 zeigt die vorgegebene Bewegung, die bereits in den FIG 3 bis 7 gezeigt wurde. Weiter zeigt FIG 8 mögliche Unterteilungen der Bewegung des Werkzeugs in die Teilbewegungen 801, 802. Dabei sind zwei Szenarien zum Unterteilen der Bewegung des Werkzeugs in jeweils dem ersten und dem zweiten Konfigurationsraum 202, 204 dargestellt.

Die erste Trajektorie 201 und die zweite Trajektorie 203 der vorgegebenen Bewegung sind mit Pfeilen versehen. Ein Abschnitt der ersten Bewegungstrajektorie, der in einem Bereich der ersten Trajektorie 201, der mit Pfeilen gekennzeichnet ist, geplant wird, ist im ersten Konfigurationsraum 202 festgelegt. Ein Abschnitt der zweiten Bewegungstrajektorie, der in einem Bereich der zweiten Trajektorie 203, der mit Pfeilen gekennzeichnet ist, geplant wird, ist im zweiten Konfigurationsraum 203 festgelegt. Die Pfeile auf den Trajektorien 201, 203 geben also an, in welchem Konfigurationsraum 202, 204 eine Teilbewegung 801, 802 festgelegt werden soll. Das Festlegen der Teilbewegungen 801, 802 in den jeweiligen Konfigurationsräumen 202, 204 kann auch als Programmieren in den jeweiligen Konfigurationsräumen 202, 204 bezeichnet werden. Die erste und die zweite Bewegungstrajektorie sind in FIG 8 nicht dargestellt. Die Teilbewegungen 801, 802 beziehen sich jedoch auf die erste bzw. die zweite Bewegungstrajektorie. In FIG 8 deuten die für die Teilbewegungen 801, 802 verwendeten Bezugszeichen lediglich an, dass in den entsprechend markierten Bereichen die Teilbewegungen 801, 802 erfolgen sollen. Dabei sollen die erste Teilbewegung 801 entlang des ersten Abschnitts der ersten Bewegungstrajektorie und die zweite Teilbewegung 802 entlang eines zweiten Abschnitts der zweiten Bewegungstrajektorie erfolgen.

Es ist möglich, dass die erste Teilbewegung 801 am Anfangspunkt 206 der ersten Bewegungstrajektorie beginnend und die zweite Teilbewegung 802 am Endpunkt 207 der zweiten Bewegungstrajektorie festgelegt wird. Diese Situation ist in FIG 8 im oberen Teil des ersten Konfigurationsraums 202 und im rechten Teil des zweiten Konfigurationsraums 204 dargestellt. Umgekehrt ist es möglich, dass die zweite Teilbewegung 802 am Anfangspunkt 206 der zweiten Bewegungstrajektorie beginnend und die erste Teilbewegung 801 am Endpunkt 207 der zweiten Bewegungstrajektorie endend festgelegt wird. Diese Situation ist in FIG 8 im unteren Teil des ersten Konfigurationsraums 202 und im linken Teil des zweiten Konfigurationsraums 204 dargestellt. Das Ermitteln der ersten Bewegungstrajektorie bezieht sich also bei der beispielhaften Darstellung der FIG 8 jeweils lediglich auf einen Teil der vorgegebenen Bewegung. Aus diesem Grund sind in FIG 8 in jedem Konfigurationsraum 202, 204 jeweils zwei Anfangspunkte 206 und zwei Endpunkte 207 dargestellt.

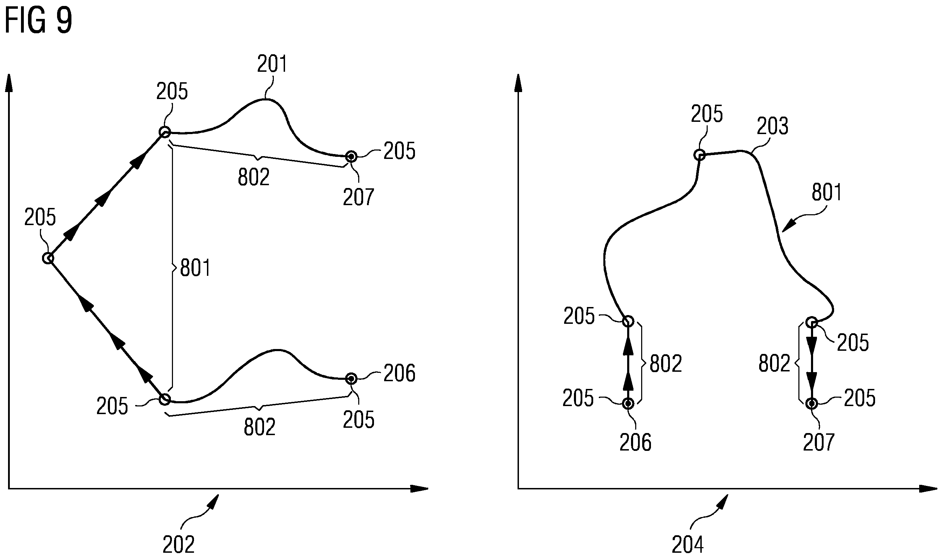

Eine weitere Möglichkeit der Programmierung ist in FIG 9 dargestellt. Die erste Bewegungstrajektorie und die zweite Bewegungstrajektorie sind in FIG 9 ebenfalls nicht dargestellt. Die Bezugszeichen für die Teilbewegungen 801, 802 deuten lediglich an, dass in den entsprechend markierten Bereichen die Teilbewegungen 801, 802 entlang den Bewegungstrajektorien erfolgen sollen.

Die weitere Möglichkeit besteht darin, dass der zweite Abschnitt der zweiten Bewegungstrajektorie, d.h. die zweite Teilbewegung 802, einen ersten Teilabschnitt und einen zweiten Teilabschnitt aufweist, wobei der erste Abschnitt der ersten Bewegungstrajektorie, d.h. die erste Teilbewegung 801, zwischen dem ersten Teilabschnitt und dem zweiten Teilabschnitt des zweiten Abschnitts der zweiten Bewegungstrajektorie ausgebildet ist. Die zweite Teilbewegung 802 wird also am Anfangspunkt 206 beginnend und am Endpunkt 207 endend festgelegt. Eine derartige Programmierung der Bewegung der Vorrichtung kann beispielsweise dann sinnvoll sein, wenn das Werkzeug zunächst einen Prozess durchführen soll, der durch die zweite Bewegung 802 im ersten Teilabschnitt beschrieben wird, dann zu einem anderen Ort im Raum bewegt werden soll, was durch die erste Bewegung 801 im ersten Abschnitt beschrieben wird, und dann einen weiteren Prozess durchführen soll, was durch die zweite Bewegung 802 im zweiten Teilabschnitt beschrieben wird.

Beispielhaft wurden der Anfangspunkt 206 und der Endpunkt 207 derart gewählt, dass die zu planende Bewegung der Vorrichtung, d.h. das Ermitteln der ersten und der zweiten Bewegungstrajektorie sich auf die gesamte vorgegebene Bewegung, d.h. die gesamte erste/zweite Trajektorie 201, 203 bezieht. In der bisherigen Beschreibung hat sich das Planen der Bewegung lediglich auf einen Teil der vorgegebenen Bewegung bezogen.

Grundsätzlich sind auch andere Unterteilungen der Bewegung des Werkzeugs in erste und zweite Abschnitte mit beliebig vielen Teilabschnitten der Abschnitte möglich, als die in FIG 8 und FIG 9 gezeigten Unterteilungen.

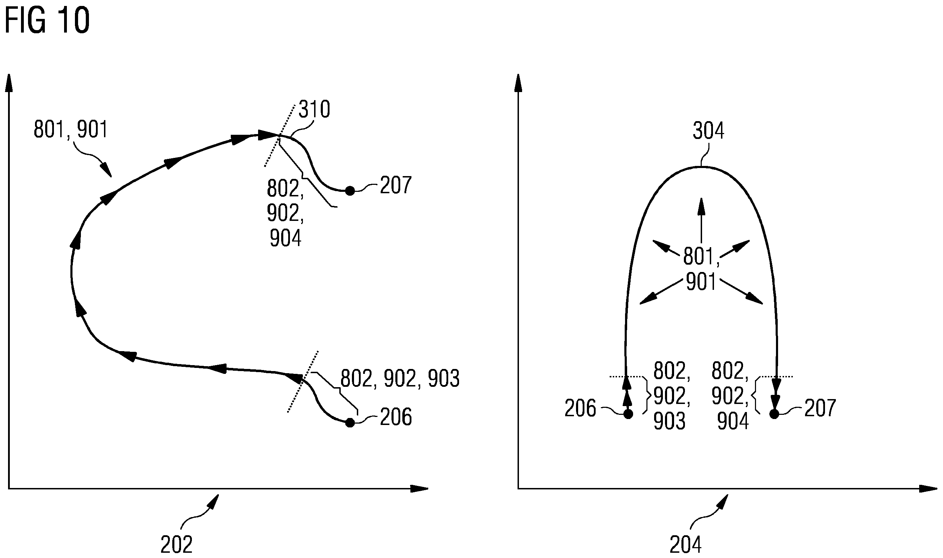

FIG 10 zeigt die ermittelte erste Bewegungstrajektorie 301 und die ermittelte zweite Bewegungstrajektorie 304, die sich gemäß FIG 9 auf die gesamte vorläufige Bewegung beziehen. Dabei kann es sich auch um eine weitere oder zusätzliche erste und/oder zweite Bewegungstrajektorie 601, 603, 701, 703 handeln, die ermittelt werden, wenn die vorgegebene erste und/oder zweite Randbedingung zunächst nicht erfüllt wird.

Im Vergleich zur ersten und zweiten Trajektorie 201, 203 der vorläufigen Bewegung (siehe FIG 9) sind die erste und die zweite Bewegungstrajektorie 301, 304 (siehe FIG 10) glatt, d.h., dass die erste und die zweite Bewegungstrajektorie 301, 304 keine undifferenzierbaren Punkte aufweisen, in denen die Geschwindigkeit undefiniert ist und die Beschleunigung beliebig groß ist. Undifferenzierbare Punkte einer Trajektorie zeichnen sich dadurch aus, dass sie Knickstellen in der Trajektorie bilden und die Vorrichtung in diesen Punkten angehalten werden muss, bevor sie weiter bewegt werden kann.

Die erste und die zweite Trajektorie 201, 203 weisen drei Knickstellen auf. Alle Knickstellen sind bei der ersten und der zweiten Bewegungstrajektorie 301, 304 nicht mehr vorhanden. Dies liegt daran, dass das Planen und Ermitteln der Bewegung der Vorrichtung bzw. des Werkzeugs über beide Konfigurationsräume 202, 204 erfolgte. D.h., dass obwohl die erste Teilbewegung 801 im ersten Konfigurationsraum 202 und die zweite Teilbewegung 802 im zweiten Konfigurationsraum 204 festgelegt sind, die erste und die zweite Bewegungstrajektorie 301, 304 über beide Konfigurationsräume 202, 204 geplant und im Rahmen des Planens optimiert wurden. Auf diese Weise kann es gelingen, dass die Vorrichtung über die gesamte Bewegung entlang der ersten/zweiten Bewegungstrajektorie 301, 304 nicht angehalten werden muss, obwohl die erste Bewegung 801 im ersten Konfigurationsraum und die zweite Bewegung im zweiten Konfigurationsraum 204 festgelegt ist.

Es ist zweckmäßig, die Bewegung des Werkzeugs in Teilbewegungen 801, 802 zu unterteilen. Beispielsweise kann es sinnvoll sein, die erste Teilbewegung 801, bei der das Werkzeug, ohne einen Prozess durchzuführen, im Freiraum bewegt werden soll, im ersten Konfigurationsraum 202 festzulegen, wenn die erste Teilbewegung 801 im Freiraum sich im ersten Konfigurationsraum 202 effizienter formulieren lässt, als im zweiten Konfigurationsraum 204. Umgekehrt kann es sein, dass die zweite Teilbewegung 802, bei dem das Werkzeug einen Prozess ausführen soll, im zweiten Konfigurationsraum 204 effizienter formuliert werden kann, als im ersten Konfigurationsraum 202. Beispielsweise kann es sein, dass die erste Teilbewegung 801 im ersten Konfigurationsraum 201 durch einen geradlinig ausgebildeten ersten Abschnitt 901 der ersten Bewegungstrajektorie 301 beschrieben wird, während die zweite Teilbewegung 802 im ersten Konfigurationsraum 202 durch einen gekrümmten Abschnitt der ersten Bewegungstrajektorie 301 beschrieben wird. Umgekehrt kann es sein, dass die zweite Teilbewegung 802 im zweiten Konfigurationsraum 204 durch einen geradlinig ausgebildeten zweiten Abschnitt 902 der zweiten Bewegungstrajektorie 304 beschrieben wird, während die erste Teilbewegung 801 im zweiten Konfigurationsraum 204 durch einen gekrümmten Abschnitt der zweiten Bewegungstrajektorie 304 beschrieben wird. In diesem Fall bietet es sich an, die Bewegung des Werkzeugs derart festzulegen, dass die Teilbewegungen 801, 802 durch jeweils geradlinig ausgebildete Abschnitte der Bewegungstrajektorien in den jeweiligen Konfigurationsräumen festgelegt sind.

Dies ist mit einem Überschleifen von der ersten zur zweiten Teilbewegung 801, 802 vergleichbar. Allerdings muss im Vergleich zur Punkt-zu-Punkt Steuerung die erste Bewegungstrajektorie nicht notwendigerweise von einem vorgegeben Übergangspunkt zwischen dem ersten und dem zweiten Abschnitt 901, 902 abweichen, um eine flüssige Bewegung zu erhalten, da die erste Bewegungstrajektorie beispielsweise als Spline über den ersten und den zweiten Abschnitt 901, 902 ermittelt wird. Diese Spline ist in jedem Punkt stetig differenzierbar, sodass ein aktives Überschleifen, bei dem eine Überschleifdistanz vorgegeben wird, nicht erfolgen muss.

Obwohl beim rechnergestützten Verfahren zum Ermitteln der Bewegung der Vorrichtung kein aktives Überschleifen erfolgt, kann es sein, dass das Werkzeug im zweiten Abschnitt 902 der ersten Bewegungstrajektorie einen Prozess unter Einhaltung einer Prozesstoleranz durchführen muss. Diese Prozesstoleranz muss beim Übergang vom ersten Abschnitt 901 zum zweiten Abschnitt 902 eingehalten werden. Die Prozesstoleranz kann also als Überschleifdistanz verstanden werden.

Bereits bekannte Planungsansätze verfolgen diese Strategie des Planens über mehrerer Konfigurationsräume 202, 204 nicht, wenn die erste Teilbewegung 801 im ersten Konfigurationsraum 202 und die zweite Teilbewegung 802 im zweiten Konfigurationsraum 204 festgelegt werden. Vielmehr wird die erste Teilbewegung 801 lediglich im ersten Konfigurationsraum 202 und die zweite Teilbewegung lediglich im zweiten Konfigurationsraum 204 geplant und optimiert.

Ein Vorteil gegenüber bestehenden Verfahren zum Ermitteln einer Bewegung einer Vorrichtung besteht darin, dass die Vorrichtung an einem Übergang von der ersten Teilbewegung 801 zur zweiten Teilbewegung 802 des Werkzeugs nicht angehalten werden muss, wenn die Bewegung anhand des vorliegenden rechnergestützten Verfahrens zum Ermitteln der Bewegung der Vorrichtung geplant wurde. Dies liegt daran, dass die Bewegung in beiden Konfigurationsräumen 202, 204 unter Einhaltung der vorgegebenen Randbedingungen geplant wird. Bisherige Ansätze weisen den Nachteil auf, dass die in den unterschiedlichen Konfigurationsräumen 202, 204 festgelegten Teilbewegungen 801, 802 jeweils lediglich in dem entsprechenden Konfigurationsraum 202, 204 geplant werden. Beim vorliegenden Verfahren wird hingegen die gesamte Bewegung in beiden Konfigurationsräumen 202, 204 geplant, wodurch der Übergang von der ersten zur zweiten Teilbewegung 801, 802 flüssig, d.h. ohne anzuhalten und mit höherer Geschwindigkeit, erfolgen kann. Vorteilhafterweise können auf diese Weise die Teilbewegungen des Werkzeugs effizient miteinander verknüpft werden.

In allen Ausführungsbeispielen kann der erste Konfigurationsraum 202 ein auf zumindest zwei translatorische und/oder rotatorische Bewegungsachsen der Vorrichtung bezogenes Koordinatensystem sein, während der zweite Konfigurationsraum 204 ein kartesisches Koordinatensystem oder ein Koordinatensystem mit generalisierten Koordinaten sein kann. Der erste Konfigurationsraum 202 kann jedoch auch das kartesische Koordinatensystem oder das Koordinatensystem mit generalisierten Koordinaten sein, während der zweite Konfigurationsraum 204 das auf zumindest zwei translatorische und/oder rotatorische Bewegungsachsen der Vorrichtung bezogenes Koordinatensystem sein kann. Generalisierte Koordinaten können beispielsweise Kugelkoordinaten oder Zylinderkoordinaten sein. Zu beachten ist, dass ein Hindernis typischerweise im ortsfesten Basissystem dargestellt wird, und, dass eine Transformation einer Form eines Hindernisses mittels inverser Kinematik nicht ohne weiteres durchführbar ist.

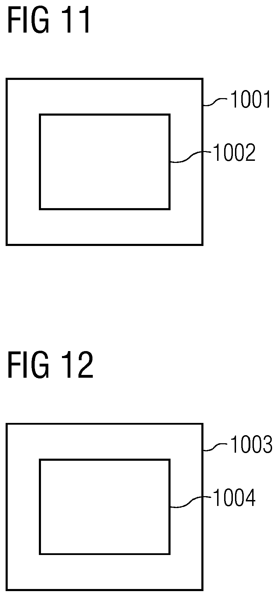

FIG 12 zeigt schematisch ein Computerprogrammprodukt 1001, umfassend Befehle 1002, wobei die Befehle 1002 bei der Ausführung des Computerprogramms durch einen Computer diesen dazu veranlassen, das Verfahren zum Planen einer Bewegung einer Vorrichtung auszuführen.

FIG 13 zeigt schematisch ein System zur Datenverarbeitung 1003, umfassend einen Prozessor 1004, wobei der Prozessor 1004 dazu ausgebildet ist, das Verfahren zum Planen einer Bewegung einer Vorrichtung auszuführen. Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang, welcher durch die beigefügten Ansprüche definiert wird, zu verlassen.

## Patentansprüche

1. Rechnergestütztes Verfahren zum Ermitteln einer Bewegung einer Vorrichtung (101),
wobei die Vorrichtung (101) ein über translatorische und/oder rotatorische Bewegungsachsen (102, 103, 104, 105, 106) der Vorrichtung (101) bewegbares Werkzeug (107) aufweist,
wobei das Verfahren folgende Verfahrensschritte aufweist:
- Ermitteln einer ersten Bewegungstrajektorie (301) des Werkzeugs (107) in einem ersten Konfigurationsraum (202), wobei beim Ermitteln der ersten Bewegungstrajektorie (301) ein vorgegebener Parameter einer Bewegung des Werkzeugs (107) optimiert wird,
- Prüfen, ob die erste Bewegungstrajektorie (301) zumindest eine vorgegebene erste Randbedingung erfüllt,
- Ermitteln einer zweiten Bewegungstrajektorie (304) des Werkzeugs (107) in einem zweiten Konfigurationsraum (204) durch Transformieren der ersten Bewegungstrajektorie (301) in den zweiten Konfigurationsraum (204), wenn die erste Bewegungstrajektorie (301) die vorgegebene erste Randbedingung erfüllt,
- Prüfen, ob die zweite Bewegungstrajektorie (304) zumindest eine vorgegebene zweite Randbedingung erfüllt,
- Bereitstellen der ersten Bewegungstrajektorie (301) und/oder der zweiten Bewegungstrajektorie (304) zum Bewegen des Werkzeugs (107), wenn die zweite Bewegungstrajektorie (304) die vorgegebene zweite Randbedingung erfüllt,
**dadurch gekennzeichnet, dass** eine erste Teilbewegung des Werkzeugs (107) durch einen ersten Abschnitt (901) der ersten Bewegungstrajektorie (301) festgelegt wird und
eine zweite Teilbewegung des Werkzeugs (107) durch einen zweiten Abschnitt (902) der zweiten Bewegungstrajektorie (304) festgelegt wird,
wobei die Teilbewegungen durch das Festlegen in den jeweiligen Konfigurationsräumen (202, 204) programmiert werden.

2. Verfahren gemäß Anspruch 1,
wobei der zweite Abschnitt (902) der zweiten Bewegungstrajektorie (304) einen ersten Teilabschnitt (903) und einen zweiten Teilabschnitt (904) aufweist,
wobei der erste Abschnitt (901) der ersten Bewegungstrajektorie (301) zwischen dem ersten Teilabschnitt (903) und dem zweiten Teilabschnitt (904) des zweiten Abschnitts (902) der zweiten Bewegungstrajektorie (304) ausgebildet ist.

3. Verfahren gemäß einem der vorhergehenden Ansprüche,
wobei der erste Konfigurationsraum (202) ein auf zumindest zwei translatorische und/oder rotatorische Bewegungsachsen (102, 103, 104, 105, 106) der Vorrichtung (101) bezogenes Koordinatensystem ist,
wobei der zweite Konfigurationsraum (204) ein kartesisches Koordinatensystem (109) oder ein Koordinatensystem mit generalisierten Koordinaten ist.

4. Verfahren gemäß einem der vorhergehenden Ansprüche,
wobei eine weitere erste Bewegungstrajektorie (601) im ersten Konfigurationsraum (202) ermittelt wird, wenn die erste Bewegungstrajektorie (301) die vorgegebene erste Randbedingung nicht erfüllt,
wobei beim Ermitteln der weiteren ersten Bewegungstrajektorie (601) der vorgegebene Parameter der Bewegung des Werkzeugs (107) unter Einhaltung der vorgegebenen ersten Randbedingung optimiert wird.

5. Verfahren gemäß einem der vorhergehenden Ansprüche,
wobei beim Prüfen, ob die erste Bewegungstrajektorie (301) die vorgegebene erste Randbedingung erfüllt, geprüft wird, ob das Werkzeug (107) derart entlang der ersten Bewegungstrajektorie (301) bewegt werden kann, dass die Vorrichtung (101) kollisionsfrei bewegt wird.

6. Verfahren gemäß Anspruch 4 und 5,
wobei das Ermitteln der weiteren ersten Bewegungstrajektorie (601) derart erfolgt, dass die Vorrichtung (101) beim Bewegen des Werkzeugs (107) entlang der weiteren ersten Bewegungstrajektorie (601) um ein Hindernis (302) herum bewegt wird.

7. Verfahren gemäß Anspruch 6,
wobei das Ermitteln der weiteren ersten Bewegungstrajektorie (601) mittels Spline-Interpolation erfolgt,
wobei im Rahmen der Spline-Interpolation zumindest eine erste Stützstelle (602) vorgegeben wird,
wobei die erste Stützstelle (602) derart gewählt wird, dass die Vorrichtung (101) beim Bewegen des Werkzeugs (107) entlang der weiteren ersten Bewegungstrajektorie (601) um das Hindernis (302) herum bewegt wird.

8. Verfahren gemäß einem der vorhergehenden Ansprüche,
wobei eine zusätzliche erste Bewegungstrajektorie (701) im ersten Konfigurationsraum (202) ermittelt wird, wenn die zweite Bewegungstrajektorie (304) die vorgegebene zweite Randbedingung nicht erfüllt,
wobei beim Ermitteln der zusätzlichen ersten Bewegungstrajektorie (701) der vorgegebenen Parameter der Bewegung des Werkzeugs (107) unter Einhaltung der vorgegebenen zweiten Randbedingung optimiert wird.

9. Verfahren gemäß einem der vorhergehenden Ansprüche,
wobei beim Prüfen, ob die zweite Bewegungstrajektorie (304) die vorgegebene zweite Randbedingung erfüllt, geprüft wird, ob das Werkzeug (107) derart entlang der zweiten Bewegungstrajektorie (304) bewegt werden kann, dass eine vorgegebene Prozesstoleranz eingehalten wird.

10. Verfahren gemäß Anspruch 9,
wobei beim Prüfen, ob das Werkzeug (107) derart entlang der zweiten Bewegungstrajektorie (304) bewegt werden kann, dass die vorgegebene Prozesstoleranz eingehalten wird, geprüft wird, ob ein vorgegebener Pfad (303) und/oder eine vorgegebene Geschwindigkeit und/oder eine vorgegebene Beschleunigung der Vorrichtung (101) oder des Werkzeugs (107) eingehalten werden.

11. Verfahren gemäß den Ansprüchen 8 und 9,
wobei das Ermitteln der zusätzlichen ersten Bewegungstrajektorie (701) durch Anpassen der ersten Bewegungstrajektorie (301) erfolgt,
wobei das Anpassen der ersten Bewegungstrajektorie (301) derart erfolgt, dass beim Bewegen des Werkzeugs (107) entlang der zusätzlichen ersten Bewegungstrajektorie (701) die vorgegebene Prozesstoleranz eingehalten wird.

12. Verfahren gemäß den Ansprüchen 10 und 11,
wobei das Anpassen der ersten Bewegungstrajektorie (301) derart erfolgt, dass die Vorrichtung (101) oder das Werkzeug (107) beim Bewegen des Werkzeugs (107) entlang der zusätzlichen ersten Bewegungstrajektorie (701) den vorgegebenen Pfad (303) und/oder die vorgegebene Geschwindigkeit und/oder die vorgegebene Beschleunigung einhält.

13. Verfahren gemäß Anspruch 12,
wobei das Anpassen der ersten Bewegungstrajektorie (301) mittels Spline-Interpolation erfolgt,
wobei im Rahmen der Spline-Interpolation zumindest eine zweite Stützstelle (702) vorgegeben wird,
wobei die zweite Stützstelle (702) derart gewählt wird, dass das Werkzeug (107) entlang der zusätzlichen ersten Bewegungstrajektorie (701) unter Einhaltung des vorgegebenen Pfads (303) und/oder der vorgegebenen Geschwindigkeit und/oder der vorgegeben Beschleunigung der Vorrichtung (101) oder des Werkzeugs (107) bewegt wird.

14. Verfahren gemäß einem der vorhergehenden Ansprüche, wobei Bewegungsmittel des Werkzeugs (107) von einem Prozessor (1004) in der Weise angesteuert werden, dass das Werkzeug (107) entlang der ersten und/oder zweiten Bewegungstrajektorie (301, 304) bewegt wird.

15. Computerprogrammprodukt (1001)
umfassend Befehle (1002),
wobei die Befehle (1002) bei der Ausführung des Computerprogramms durch einen Computer diesen dazu veranlassen, das Verfahren gemäß einem der vorhergehenden Ansprüche 1 bis 14 auszuführen.

16. System zur Datenverarbeitung (1003),
umfassend einen Prozessor (1004),
wobei der Prozessor (1004) dazu ausgebildet ist, das Verfahren gemäß einem der vorhergehenden Ansprüche 1 bis 14 auszuführen.

## Claims

1. A computer-assisted method for ascertaining a movement of an apparatus (101),
wherein the apparatus (101) comprises a tool (107) that is movable by way of translational and/or rotational axes of movement (102, 103, 104, 105, 106) of the apparatus (101), wherein the method includes the following method steps:
- ascertaining a first movement trajectory (301) of the tool (107) in a first configuration space (202), wherein a predetermined parameter of a movement of the tool (107) is optimized when ascertaining the first movement trajectory (301),
- checking whether the first movement trajectory (301) satisfies at least one predetermined first boundary condition,
- ascertaining a second movement trajectory (304) of the tool (107) in a second configuration space (204) by transforming the first movement trajectory (301) into the second configuration space (204) if the first movement trajectory (301) satisfies the predetermined first boundary condition,
- checking whether the second movement trajectory (304) satisfies at least one predetermined second boundary condition,
- providing the first movement trajectory (301) and/or the second movement trajectory (304) for moving the tool (107) if the second movement trajectory (304) satisfies the predetermined second boundary condition,
**characterized in that** a first partial movement of the tool (107) is set by a first section (901) of the first movement trajectory (301) and
a second partial movement of the tool (107) is set by a second section (902) of the second movement trajectory (304),
wherein the partial movements are programmed by the setting in the respective configuration spaces (202, 204).

2. Method according to Claim 1,
wherein the second section (902) of the second movement trajectory (304) has a first portion (903) and a second portion (904),
wherein the first section (901) of the first movement trajectory (301) is formed between the first portion (903) and the second portion (904) of the second section (902) of the second movement trajectory (304).

3. Method according to either of the preceding claims, wherein the first configuration space (202) is a coordinate system relating to at least two translational and/or rotational movement axes (102, 103, 104, 105, 106) of the apparatus (101), wherein the second configuration space (204) is a Cartesian coordinate system (109) or a coordinate system with generalized coordinates.

4. Method according to any one of the preceding claims, wherein a further first movement trajectory (601) is ascertained in the first configuration space (202) if the first movement trajectory (301) does not satisfy the predetermined first boundary condition,
wherein the predetermined parameter of the movement of the tool (107) is optimized while observing the predetermined first boundary condition when ascertaining the further first movement trajectory (601).

5. Method according to any one of the preceding claims, wherein a check as to whether the tool (107) can be moved along the first movement trajectory (301) in such a way that the apparatus (101) is moved in collision-free fashion is carried out when checking whether the first movement trajectory (301) satisfies the predetermined first boundary condition.

6. Method according to Claims 4 and 5,
wherein ascertaining the further first movement trajectory (601) is implemented in such a way that the apparatus (101) is moved around an obstacle (302) when moving the tool (107) along the further first movement trajectory (601).

7. Method according to Claim 6,
wherein ascertaining the further first movement trajectory (601) is implemented by means of a spline interpolation, wherein at least one first interpolation point (602) is predetermined within the scope of the spline interpolation, wherein the first interpolation point (602) is chosen in such a way that the apparatus (101) is moved around the obstacle (302) when moving the tool (107) along the further first movement trajectory (601).

8. Method according to any one of the preceding claims, wherein an additional first movement trajectory (701) is ascertained in the first configuration space (202) if the second movement trajectory (304) does not satisfy the predetermined second boundary condition,
wherein the predetermined parameter of the movement of the tool (107) is optimized while observing the predetermined second boundary condition when ascertaining the additional first movement trajectory (701).

9. Method according to any one of the preceding claims,
wherein a check as to whether the tool (107) can be moved along the second movement trajectory (304) in such a way that a predetermined process tolerance is observed is carried out when checking whether the second movement trajectory (304) satisfies the predetermined second boundary condition.

10. Method according to Claim 9,
wherein a check as to whether a predetermined path (303) and/or a predetermined speed and/or a predetermined acceleration of the apparatus (101) or of the tool (107) are maintained is carried out when checking whether the tool (107) can be moved along the second movement trajectory (304) in such a way that the predetermined process tolerance is observed.

11. Method according to Claims 8 and 9,
wherein the additional first movement trajectory (701) is ascertained by adapting the first movement trajectory (301), wherein the first movement trajectory (301) is adapted in such a way that the predetermined process tolerance is observed when moving the tool (107) along the additional first movement trajectory (701).

12. Method according to Claims 10 and 11,
wherein the first movement trajectory (301) is adapted in such a way that the apparatus (101) or the tool (107) maintains the predetermined path (303) and/or the predetermined speed and/or the predetermined acceleration when moving the tool (107) along the additional first movement trajectory (701).

13. Method according to Claim 12,
wherein the first movement trajectory (301) is adapted by means of a spline interpolation,
wherein at least one second interpolation point (702) is predetermined within the scope of the spline interpolation, wherein the second interpolation point (702) is chosen in such a way that the tool (107) is moved along the additional first movement trajectory (701) while maintaining the predetermined path (303) and/or the predetermined speed and/or the predetermined acceleration of the apparatus (101) or of the tool (107).

14. Method according to any one of the preceding claims, wherein movement means of the tool (107) are actuated by a processor (1004) in such a way that the tool (107) is moved along the first and/or second movement trajectory (301, 304).

15. Computer program product (1001)
comprising commands (1002),
wherein the commands (1002) prompt a computer to carry out the method according to any one of preceding Claims 1 to 14 when said computer executes the computer program.

16. System for data processing (1003),
comprising a processor (1004),
wherein the processor (1004) is embodied to carry out the method according to any one of preceding Claims 1 to 14.

## Revendications

1. Procédé assisté par ordinateur permettant de déterminer un mouvement d'un dispositif (101),
dans lequel le dispositif (101) présente un outil (107) mobile par l'intermédiaire d'axes de mouvement (102, 103, 104, 105, 106) de translation et/ou de rotation du dispositif (101),
dans lequel le procédé présente les étapes de procédé suivantes :
- détermination d'une première trajectoire de mouvement (301) de l'outil (107) dans un premier espace de configuration (202), dans lequel lors de la détermination de la première trajectoire de mouvement (301) un paramètre prédéfini d'un mouvement de l'outil (107) est optimisé,
- vérification si la première trajectoire de mouvement (301) remplit au moins une première condition limite prédéfinie,
- détermination d'une deuxième trajectoire de mouvement (304) de l'outil (107) dans un deuxième espace de configuration (204) par le biais de la transformation de la première trajectoire de mouvement (301) dans le deuxième espace de configuration (204) lorsque la première trajectoire de mouvement (301) remplit la première condition limite prédéfinie,
- vérification si la deuxième trajectoire de mouvement (301) remplit au moins une deuxième condition limite prédéfinie,
- mise à disposition de la première trajectoire de mouvement (301) et/ou de la deuxième trajectoire de mouvement (304) permettant de déplacer l'outil (107) lorsque la deuxième trajectoire de mouvement (304) remplit la deuxième condition limite prédéfinie,
**caractérisé en ce qu'**un premier mouvement partiel de l'outil (107) est défini par le biais d'une première section (901) de la première trajectoire de mouvement (301) et un deuxième mouvement partiel de l'outil (107) est défini par le biais d'une deuxième section (902) de la deuxième trajectoire de mouvement (304), dans lequel les mouvements partiels sont programmés par le biais de la définition dans les espaces de configuration (202, 204) respectifs.

2. Procédé selon la revendication 1,
dans lequel la deuxième section (902) de la deuxième trajectoire de mouvement (304) présente une première section partielle (903) et une deuxième section partielle (904),
dans lequel la première section (901) de la première trajectoire de mouvement (301) est réalisée entre la première section partielle (903) et la deuxième section partielle (904) de la deuxième section (902) de la deuxième trajectoire de mouvement (304) .

3. Procédé selon l'une quelconque des revendications précédentes,
dans lequel le premier espace de configuration (202) est un système de coordonnées se rapportant à au moins deux axes de mouvement de translation et/ou de rotation (102, 103, 104, 105, 106) du dispositif (101),
dans lequel le deuxième espace de configuration (204) est un système de coordonnées cartésiennes (109) ou un système de coordonnées avec des coordonnées généralisées.

4. Procédé selon l'une quelconque des revendications précédentes,
dans lequel une autre première trajectoire de mouvement (601) dans le premier espace de configuration (202) est déterminée lorsque la première trajectoire de mouvement (301) ne remplit pas la première condition limite prédéfinie,
dans lequel lors de la détermination de l'autre première trajectoire de mouvement (601) le paramètre prédéfini du mouvement de l'outil (107) est optimisé en respectant la première condition limite prédéfinie.

5. Procédé selon l'une quelconque des revendications précédentes,
dans lequel lors de la vérification si la première trajectoire de mouvement (301) remplit la première condition limite prédéfinie, il est vérifié si l'outil (107) peut être déplacé le long de la première trajectoire de mouvement (301) de telle sorte que le dispositif (101) se déplace sans collision.

6. Procédé selon les revendications 4 et 5,
dans lequel la détermination de l'autre première trajectoire de mouvement (601) s'effectue de telle sorte que le dispositif (101) lors du mouvement de l'outil (107) le long de l'autre première trajectoire de mouvement (601) est déplacé autour d'un obstacle (302) .

7. Procédé selon la revendication 6,
dans lequel la détermination de l'autre première trajectoire de mouvement (601) s'effectue au moyen d'une interpolation de splines,
dans lequel dans le cadre de l'interpolation de splines au moins un premier point d'appui (602) est prédéfini,
dans lequel le premier point d'appui (602) est sélectionné de telle sorte que le dispositif (101) est déplacé autour de l'obstacle (302) lors du mouvement de l'outil (107) le long de l'autre première trajectoire de mouvement (601).

8. Procédé selon l'une quelconque des revendications précédentes,
dans lequel une première trajectoire de mouvement supplémentaire (701) est déterminée dans le premier espace de configuration (202) lorsque la deuxième trajectoire de mouvement (304) ne remplit pas la deuxième condition limite prédéfinie,
dans lequel lors de la détermination de la première trajectoire de mouvement supplémentaire (701) le paramètre prédéfini du mouvement de l'outil (107) est optimisé en respectant la deuxième condition limite prédéfinie.

9. Procédé selon l'une quelconque des revendications précédentes,
dans lequel lors de la vérification si la deuxième trajectoire de mouvement (304) remplit la deuxième condition limite prédéfinie, il est vérifié si l'outil (107) peut être déplacé le long de la deuxième trajectoire de mouvement (304) de telle sorte qu'une tolérance de processus prédéfinie est respectée.

10. Procédé selon la revendication 9,
dans lequel lors de la vérification si l'outil (107) peut être déplacé le long de la deuxième trajectoire de mouvement (304) de telle sorte que la tolérance de processus prédéfinie est respectée, il est vérifié si un chemin prédéfini (303) et/ou une vitesse prédéfinie et/ou une accélération prédéfinie du dispositif (101) ou de l'outil (107) sont respectés.

11. Procédé selon l'une quelconque des revendications 8 et 9, dans lequel la détermination de la première trajectoire de mouvement supplémentaire (701) s'effectue par le biais de l'adaptation de la première trajectoire de mouvement (301), dans lequel l'adaptation de la première trajectoire de mouvement (301) s'effectue de telle sorte que lors du mouvement de l'outil (107) le long de la première trajectoire de mouvement supplémentaire (701) la tolérance de processus prédéfinie est respectée.

12. Procédé selon les revendications 10 et 11,
dans lequel l'adaptation de la première trajectoire de mouvement (301) s'effectue de telle sorte que le dispositif (101) ou l'outil (107) respectent le chemin prédéfini (303) et/ou la vitesse prédéfinie et/ou l'accélération prédéfinie lors du déplacement de l'outil (107) le long de la première trajectoire de mouvement supplémentaire (701).

13. Procédé selon la revendication 12,
dans lequel l'adaptation de la première trajectoire de mouvement (301) s'effectue au moyen d'une interpolation de splines,
dans lequel dans le cadre de l'interpolation de splines au moins un deuxième point d'appui (702) est prédéfini,
dans lequel le deuxième point d'appui (702) est sélectionné de telle sorte que l'outil (107) est déplacé le long de la première trajectoire de mouvement supplémentaire (701) en respectant le chemin prédéfini (303) et/ou la vitesse prédéfinie et/ou l'accélération prédéfinie du dispositif (101) ou de l'outil (107) .

14. Procédé selon l'une quelconque des revendications précédentes,
dans lequel des moyens de mouvement de l'outil (107) sont commandés par un processeur (1004) de manière à ce que l'outil (107) soit déplacé le long de la première et/ou de la deuxième trajectoire de mouvement (301, 304).

15. Produit de programme informatique (1001) comprenant des instructions (1002),
dans lequel les instructions (1002), lors de la réalisation du programme informatique par le biais d'un ordinateur, amènent celui-ci à réaliser le procédé selon l'une quelconque des revendications 1 à 14 précédentes.

16. Système permettant le traitement de données (1003), comprenant un processeur (1004),
dans lequel le processeur (1004) est configuré pour réaliser le procédé selon l'une quelconque des revendications 1 à 14 précédentes.
